# EUROPEAN PATENT APPLICATION

(11) **EP 1 469 236 A2**
(43) Date of publication of application: **20.10.2004**
(21) Application number: 04009237.1
(22) Date of filing: 19.04.2004
(51) Int. Cl.: F16H 61/28

(54) **Vehicle running range switching device**

(30) Priority: 04.03.2004 JP 2004061443; 25.12.2003 JP 2003431612; 18.04.2003 JP 2003114970
(71) Applicant: AISIN AW CO., LTD., Anjo-shi, Aichi-ken 444-1192 (JP)
(72) Inventor: Ozaki, Kazuhisa, Anjo-shi Aichi-ken, 444-1192 (JP); Inuzuka, Takeshi, Anjo-shi Aichi-ken, 444-1192 (JP); Hosono, Chihiro, Anjo-shi Aichi-ken, 444-1192 (JP); Murase, Kazuhisa, Anjo-shi Aichi-ken, 444-1192 (JP); Tanaka, Michimasa, Toyota-shi Aichi-ken, 471-8571 (JP)
(74) Representative: VOSSIUS & PARTNER

(57) **Abstract**

A range switching device is provided that is capable of selecting a running range accurately using a simple configuration and control. A conversion mechanism includes a ball screw shaft, a ball nut, and other members. The ball nut is connected to a spool through an arm member, a range control shaft, and a detent lever. The spool is moved into a specified selection region among a plurality of selection regions by the conversion mechanism and the arm member. Then, the spool is moved to a selection position by the detent mechanism and positioned and held thereat.

## Description

The disclosure of Japanese Patent Application No. 2004-061443 filed on March 4, 2004 including the specification, drawings and abstract is incorporated herein by reference in its entirety.

The present invention relates to a vehicle running range switching device provided with a so-called shift-by-wire system in which a vehicle driver sets a running range (for example, P, R, N, D) selected with, for example, a shift lever using an electric signal.

Generally, a running range of a vehicle provided with an automatic transmission is set by a vehicle driver operating a shift lever so as to shift a manual valve, whereby a hydraulic path is changed. In order to execute such setting, shift-by-wire (SBW) systems are known in which the running range selected by the vehicle driver is set using electric signals (see, for example, JP-A-7-310820), instead of with a mechanical wire or rod.

Further examples include JP-A-2002-310295 that discloses a shift-by-wire (SBW) system that uses a feeding screw device, and US-A-4843901 that discloses a shift-by-wire (SBW) system using a worm gear.

It is well known that the feeding screw device disclosed in JP-A-2002-310295 is capable of achieving a large reduction ratio and high position accuracy.

On the other hand, the worm gear disclosed in US-A-4843901 can easily obtain a large reduction ratio.

However, the art of JP-A-2002-310295 is configured such that rotation of a motor 2 directly causes advance/retract of a valve rod 11 of a control valve 1 using a feeding screw unit 4, which is a conversion mechanism. That is, a screw member 42 and the valve rod 11 are disposed coaxially in series, and when the screw member 42 is moved in the axial direction, an end thereof contacts with an end of the valve rod 11 so as to cause advance or retraction. For this reason, the unit needs to be as long as the lengths of the screw member 42 and the valve rod 11, plus a length corresponding to an advancement/retraction displacement amount in the axial direction of the screw member 42 (which is the same as an advancement/retraction displacement amount in the axial direction of the valve rod 11). Consequently, the unit must be substantially enlarged, which has a detrimental effect on design freedom since installation positioning is restricted.

In the art of JP-A-2002-310295, the rotation of the screw member 42 is stopped by a rod 51 that is connected to a parking unit 5. As a result, durability of the rod 51 needs to be improved. Further, the configuration is such that vibration generated by rotation of a nut member 41 is transmitted directly to the parking unit 5 and the valve rod 11 of the control valve 1 through the screw member 42. Accordingly, durability of the control valve 1 is reduced. Further, because the rod 51 and the valve rod 11 of the control valve 1, which require different pressing pressures, are driven by the same screw member 42, the screw member 42 may be distorted. In this case, balls within the nut member 41 make irregular localized contact, as a result of which it impossible to drive the nut member 41 smoothly, and efficiency is reduced.

On the other hand, with the art disclosed in US-A-4843901, usually, the worm gear is subject to substantial contact resistance with an intermeshed gear, and thus needs to be provided with a larger force from a motor than a ball screw in order to be rotated. In addition, if it is driven in reverse, an even larger force is needed, namely, it is necessary to output substantial torque from the motor. Therefore, if, for example, the running range cannot be changed over because a failure occurs in the motor or the worm gear, with the art disclosed in US-A-4843901, manual release is enabled so as to forcibly change the running range and further, manual release is executed with a small force. Accordingly, the worm gear is mechanically separated from the other gears.

However, in this case, manual release cannot be achieved easily because it is executed after execution of a complicated procedure for separating the gears mechanically. Further, a mechanism for mechanical separation is required, thus enlarging the range switching device, and consequently, production costs thereof are increased. Moreover, because gears are used for torque transmission, manual release cannot be executed easily, and therefore, the installation position and method for manual release are restricted. Additionally, after the worm gear and the intermeshed gear are separated, they need to be meshed with each other once again afterwards. As a result, the gears can be damaged, which leads to a fall in the durability of the device. In particular, when only the worm gear needs to be separated, meshing of the gear that meshes with the worm gear needs to be adjusted.

Accordingly, a first object of the present invention is to provide a range switching device that offers improved freedom of design by removing the need to enlarge the device.

A second object of the present invention is to provide a range switching device that is provided with a rotation stopping unit that facilitates smooth operation of a conversion mechanism and thus improves efficiency.

A third object of the present invention is to provide a range switching device that is capable of executing manual release simply.

According to the first aspect of the invention, linear motion of the conversion mechanism is converted to swinging motion of the intermediate member, and the range switching member is disposed within the predetermined selection region as a result of this swinging motion of the intermediate member. Consequently, an advancement/retraction amount (a movement amount) of the range switching member can be adjusted appropriately by the intermediate member (by changing the shape, size, arrangement position, arrangement direction thereof.) Thus, it is not necessary to pay special attention to the advancement/retraction amount of the range switching member when respective structural members of the range switching device are positioned, whereby design freedom is increased and limitations on arrangement positions of the respective structural members are reduced.

Further, in the conversion mechanism, the number of gear steps can be reduced as compared to a conversion mechanism constituted from a gear train having a plurality of gears. Consequently, controllability is improved and structural members for complicated control and improving controllability do not need to be added. As a result, production cost can be reduced.

According to the second aspect of the invention, the range switching member is positioned in a predetermined selection region through the intermediate member. Consequently, the range switching member can be positioned within the predetermined selection region using a simple control.

According to the third aspect of the invention, because linear motion from the conversion mechanism is converted to swinging motion by the arm member, the magnitude of transmission torque and the movement amount (advancement/retraction amount) of the range switching member can be adjusted easily by setting the length of the arm of the arm member appropriately. Because the number of gears in the gear train does not need to be increased, the torque transmission rate does not fall, and transmission noise is extremely low. Further by changing the length, shape and connection direction of the arm member, the advancement/retraction amount and the movement direction of the range switching member can be adjusted freely. Thus, if any member that requires change in advancement/retraction amount, such as a lock mechanism, is added to the arm, in addition to the range switching member, the advancement/retraction amount and the movement direction can be set appropriately for each such member. Accordingly, general purpose applicability is excellent.

According to the fourth aspect of the invention, controllability of the conversion mechanism is improved as compared to a conversion mechanism constituted from a plurality of gears. Thus, the range switching member can be placed easily in the predetermined selection region. Because the range switching member is moved in the predetermined selection region to the selection position that requires high positional accuracy by utilization of the detent mechanism, the overall control can be simplified and at the same time, high positional accuracy is maintained.

The provision of the detent mechanism which holds the range switching member within the predetermined selection region enables reaction force from the range switching member (for example, a manual valve) to be countered so as to hold the position of the range switching member. Thus, there is no need for a new position holding mechanism to be added, and a conventional detent mechanism may be used as it is, thereby leading to reduction in cost.

According to the fifth aspect of the invention, the advancement/retraction amount can be changed by changing the distances between and a shape of a plurality of convex and concave portions that are provided for positioning of the detent member. Thus, the advancement/retraction amount of the range switching member can be adjusted as chosen, and even if the advancement/retraction amount of the lock mechanism in the detent member is different from the advancement/retraction amount of the range switching member, the advancement/retraction amount can be set for each. Accordingly, general purpose applicability is excellent.

According to the sixth aspect of the invention, the advancement/retraction amount and the movement direction of the range switching member can be set appropriately using the connection position and connection direction between the range switching member and detent member.

According to the seventh aspect of the invention, the advancement/retraction amount and direction of the range switching member can be set up appropriately by a connection position and connection direction of the range switching member and the detent member.

According to the eighth aspect of the invention, the direction of the linear motion to be converted by the conversion mechanism is different from the movement direction of the range switching member, thereby improving the degree of design freedom.

According to the ninth aspect of the invention, the range switching member is moved by the motor into the predetermined selection region among the plurality of selection regions through the conversion mechanism and the arm member, and after that, this range switching member is further moved by the detent mechanism and positioned and held. That is, the motor carries out macro-control of the range switching member in which the range switching member is placed in to the predetermined selection region and after that, movement of the range switching member within the predetermined selection region to the selection position, which requires higher positional accuracy, is carried out by the detent mechanism. Therefore, high positional accuracy can be maintained while the overall control can be simplified.

According to the tenth aspect of the invention, high positional accuracy of the manual valve that acts as the range switching member can be ensure with a simple control.

According to the eleventh aspect of the invention, the position of the range switching member can be detected without relying on the position of the conversion mechanism and the operation state of the operating mechanism of the intermediate member (regardless of the lock position of the ball screw). As a result, the accuracy of position detection is improved.

Further, since one of the first and second control units can be incorporated in the case member, the control unit does not need to be provided outside the case. Consequently, the size of the mechanism can be reduced without an increase in cost.

Moreover, at least one of the first and second control units are housed in the case member provided with the motor. Accordingly, the control unit can be disposed in the vicinity of the motor, thereby minimizing the length of wire required for connection thereof. Consequently, the space necessary for the wiring is reduced and the influence of electromagnetic noise generated by a long wire can be reduced.

According to the twelfth aspect of the invention, at least one of the first and second control units and the position detecting member are housed in the case member. Thus, the length of wire for connecting therebetween can be minimized, the space necessary for the wiring can be reduced, and the influence of electromotive noise generated by a long wire can also be reduced.

Further, since at least one of the first and second control units and the position detecting member are housed in the case member, these structural members do not need to be attached outside the case. As a result, the size of the mechanism can be reduced without an increase in cost.

According to the thirteenth aspect of the invention, because the first and second control unit are disposed on the two-upper and lower levels, the occupied area can be reduced, as compared to the case of a side by side arrangement, by the same amount as the overlapping area between them. Further, the first control unit can be added to the conventionally provided second control unit without having to make substantial changes to design or arrangement.

According to the fourteenth aspect of the invention, because the first and second control unit are disposed on the same substrate, the assembly work for the first and second control unit is easy as compared to a case where they are disposed on two-upper and lower levels. Particularly, if the first and second control unit are formed on different regions of the same substrate, the assembly work therefor is much easier.

According to the fifteenth aspect of the invention, because the position of the range switching member is detected through the intermediate member, the position of the range switching member does not need to be detected directly, thereby increasing the degree of design freedom.

According to the sixteenth aspect of the invention, because the conversion mechanism is constructed from the ball screw, the range switching member can be moved with high positional accuracy. Further, because the friction coefficient thereof is extremely small as compared to a sliding contact screw, the ball screw system is particularly effective when the range switching member is positioned in a selection region by the detent mechanism. That is, if the ball screw shaft needs to be rotated by moving the ball nut in the axial direction, it can be rotated with relative ease, and the torque required for rotating the ball screw shaft is small. Thus, the size of the motor, which is the driving source, can be reduced. Therefore, the size of the mechanism can be reduced, thereby reducing power consumption.

Additionally, the movement of the ball nut in the axial direction can be controlled in accordance with the rotation direction of the motor, thereby improving control accuracy. Thus, it is not necessary to add any new members for reversing the movement in the axial direction, such as an electromagnetic clutch, whereby costs can be reduced.

Further, setting of the reduction ratio is easier as compared to a conversion mechanism constituted of a gear train having a plurality of gears and a high reduction ratio can be attained by eliminating space in the diameter direction of the gears.

According to the seventeenth aspect of the invention, a conversion mechanism having an extremely low friction coefficient is configured using an axial cam member having a spiral cam groove and roller-shaped cam followers which roll along the cam groove. In this case also, the same effects as the sixteenth aspect can be achieved.

According to the eighteenth aspect of the invention, the range switching member can be switched by the auxiliary switching unit even if the motor is inactive.

According to the nineteenth aspect of the invention, because the auxiliary switching unit switches the range switching member by moving the arm member, the range switching member can be positioned as chosen, regardless of the position of the nut member.

According to the twentieth aspect of the invention, because the auxiliary switching unit changes over the range switching member by moving the nut member of the conversion mechanism, the range switching member can be changed over by moving the nut member with a smaller force than when the arm member is moved.

According to the twenty first aspect of the invention, the nut member of the conversion mechanism is stopped from rotating when the engagement member held by the case member engages the guide groove. Accordingly, the nut member is permitted to move with a degree of play in a direction in line with the ball screw shaft.

According to the twenty second aspect of the invention, because the engagement member is a pin-like member that protrudes into the case member, the configuration of the engagement member is simple.

According to the twenty third aspect of the invention, because the engagement member is a rail-like member inserted into the case member, an oil seal, which is necessary for a configuration in which the engagement member goes through the case member, is not needed.

According to the twenty fourth aspect of the invention, because the arm member can be formed by combining two parts of the same shape, cost can be reduced since mass production of the shape part is possible.

According to the twenty fifth aspect of the invention, because the shape of the arm member offers excellent freedom of design, the shape of the arm member can be formed appropriately in line with the arrangement of other structural members.

According to the twenty sixth aspect of the invention, because the arm member is configured with the small two-branch section, the space occupied thereby is reduced.

According to the twenty seventh aspect of the invention, the range switching member can be configured as a unit with the case member, and following integration, can be installed on the casing. Therefore, incorporation is easily possible for any vehicle, including those that are not provided with the range switching device of the present invention.

According to the twenty eighth aspect of the invention, it is possible to clearly separate the section (the electronic chamber) housing the first and the second control units, and the section (the mechanical chamber) housing the conversion mechanism, the arm member and the auxiliary switching unit.

According to the twenty ninth aspect of the invention, the overall configuration can be formed to be compact.

According to the thirtieth aspect of the invention, a compact configuration can be attained while preventing interference between the ball nut and the motor.

According to the thirty first aspect of the invention, the overall configuration can be formed to be compact despite the provision of the auxiliary switching unit.

According to the thirty second aspect of the invention, the axial member of the auxiliary switching unit that is disposed in parallel to the ball screw shaft is slid in the axial direction during manual operation. Accordingly, the dimensions of the overall configuration, including that in the sliding direction, and in particular, that in the direction perpendicular to the axial direction, can be reduced, thereby achieving a compact configuration.

According to the thirty third aspect of the invention, the bearing supporting rotation of the motor and the bearing supporting the end section of the ball screw shaft are located at different positions along the axial direction. Accordingly, overlap therebetween is prevented, whereby size reduction in the direction perpendicular to the axis is possible.

According to the thirty fourth aspect of the invention, because the rotation of the nut member is stopped by the rotation stopping unit, the screw member does not become loose, thus allowing the nut member to rotate smoothly and move in the axial direction. Further, a connecting member for connecting the parking rod, which acts as a screw member rotation stopper, does not need to be provided, in contrast to the inventions described in the related art. Accordingly, costs can be reduced. Further, because the size of the connecting member in the axial direction for connecting the rotation stopping member does not need to be ensured, the axial direction dimensions can be made compact.

According to the thirty fifth aspect of the invention, because the rotation stopping unit is supported on the case member, vibration generated by the rotation of the motor is absorbed by the rotation block, thus enabling positioning accuracy of the range switching member to be improved. Further, there is no impact on the parking mechanism, in contrast to the case of the inventions described in the related art.

According to the thirty sixth aspect of the invention, the mechanism can be constructed into a single unit including the conversion mechanism, thereby improving the availability for general purpose. Further, the parking mechanism is never affected badly different from the invention described in the Related Art.

According to the thirty seventh aspect of the invention, because the rotation stopping unit is constructed by engaging the engagement member held by the case member with the guide groove in the nut member, the screw member is effectively prevented from being deformed due to distortion. Consequently, the nut member can be slid smoothly along the screw member.

According to the thirty eighth aspect of the invention, because the rotation stopping unit is constructed by engaging the engagement member held by the case member with the guide groove in the nut member, the screw member is effectively prevented from being deformed due to distortion. Consequently, the nut member can be slid smoothly along the screw member. According to this aspect, the engagement member is configured from a pin-like member that engages the guide groove with a degree of play.

According to the thirty ninth aspect of the invention, because the rotation stopping unit is constructed by engaging the engagement member held by the case member with the guide groove in the nut member, the screw member is effectively prevented from being deformed due to distortion. Consequently, the nut member can be slid smoothly along the screw member. According to this aspect, the engagement member is constituted of a pin-like screw member that engages the guide groove with a degree of play.

According to the fortieth aspect of the invention, because the rotation stopping unit is constructed by engaging the engagement member held by the case member with the guide groove in the nut member, the screw member is effectively prevented from being deformed due to distortion. Consequently, the nut member can be slid smoothly along the screw member. According to this aspect, the engagement member is constituted of a rail-like member that engages the guide groove with a degree of play.

According to the forty first aspect of the invention, the configuration is such that the ball nut is sandwiched by both ends of the two-branch section, and the ball nut makes contact with the arm member through two points. Consequently, torque is transmitted to the arm member equally through the two points so that the ball rolls smoothly and the ball nut can move in parallel to the shaft. As a result, efficiency of the ball screw can be increased and the durability of the ball screw is improved.

According to the forty second aspect of the invention, because the clearance in the axial direction between the ball nut and the arm member can be adjusted, the ball can roll smoothly and the ball nut can move in parallel to the shaft. Consequently, reduction in the efficiency of the ball screw can be prevented, and the durability of the ball screw is improved.

According to the forty third aspect of the present invention, because the arm member swings with respect to the cam follower that engages the groove in the ball nut when the ball nut moves linearly along the ball screw axis, the swinging motion thereof occurs smoothly.

According to the forty fourth aspect of the invention, because the cam follower is formed in a circular shape, the swinging motion of the arm member occurs smoothly. Further, because the circular cam followers are connected to ends of the two-branch section which is formed so as to narrow gradually toward the distal ends, the distal ends of the two-branch section are unlikely to interfere with the ball nut when swinging motion of the arm member occurs.

According to the forty fifth aspect of the invention, because the cam follower is formed in a circular shape, the swinging motion of the arm member occurs smoothly. Further because the cam follower is formed by folding the distal ends of the two-branch section inwardly, its production is easy.

According to the forty sixth aspect of the invention, because the cam follower is formed in a circular shape, the swinging motion of the arm member occurs smoothly. Further, because the circular cam followers are provided such that there is overlap with the inside of the distal ends of the two-branch section, the distal ends of the two-branch section are unlikely to interfere with the ball nut when the arm member swings.

According to the forty seventh aspect of the invention, because the cam follower is configured from the roller-like members supported rotatably by the distal ends of the two-branch section, the swinging motion of the arm member is even smoother.

According to the forty eighth aspect of the invention, because the range can be switched based on manual operation of the auxiliary switching unit, even if the range switching device is inactive, the vehicle can be moved by manual operation. Further, because mechanical separation is not necessary, a mechanism for separation is not needed, and thus the auxiliary switching unit can be realized with a simple configuration. Accordingly, the size of the device can be reduced. Because gear deterioration resulting from separation thereof can be reduced, the durability of the device is improved.

According to the forty ninth aspect of the invention, because the conversion mechanism converts rotary motion to linear motion, manual release can be achieved using linear motion without rotating the gears, unlike the case of a conversion mechanism using a gear train. Thus, the necessary configuration can be configured with a simple form, thereby allowing reduction in the size of the device. Further, because a member for the manual release does not need to be positioned on a specific transmission member, the degree of design freedom is improved.

According to the fiftieth aspect of the invention, the release load and the release stroke can be set appropriately depending on the length of the arm of the arm member because the conversion mechanism is the driven object. Further because the conversion mechanism is a mechanism which converts rotary motion to linear motion, the gears do not need to be rotated and manual release can be achieved using linear motion. Consequently, the device can be simplified and reduced in size. Because a mechanism for engaging and disengaging the gears is not needed, the size of the device can be reduced.

According to the fifty first aspect of the invention, manual release can be achieved with a simple configuration. Because a mechanism for engaging and disengaging gears is unnecessary, the size of the device can be reduced.

According to the fifty second aspect of the invention, because the driven object is the intermediate member, the auxiliary switching unit may be positioned freely regardless of the position of the ball nut. Further because the range is selected by driving the intermediate member, the range switching member can be switched more securely. Further, because a mechanism for engaging and disengaging gears is not needed, the size of the device can be reduced.

According to the fifty third aspect of the invention, manual release can be realized with a simple configuration. Because a mechanism for engaging and disengaging gears is unnecessary, the size of the device can be reduced.

According to the fifty fourth aspect of the invention, because the auxiliary switching unit is detachably connected to the linearly moving member, the range switching member can be switched by moving the linearly moving member linearly along the shaft using the auxiliary switching unit.

According to the fifty fifth aspect of the invention, because the axial member is parallel to the shaft, axial length thereof does not need to be extended unnecessarily, thereby allowing reduced size. Further, because the axial member is slid in the axial direction using manual operation, the linearly moving member can be moved smoothly along the shaft.

According to the fifty sixth aspect of the invention, because the conversion mechanism is configured using the ball screw, the configuration of the auxiliary switching unit can be simplified and the range switching member can be switched with a small force.

According to the fifty seventh aspect of the invention, because the auxiliary switching unit is detachably connected to the ball nut, the range switching member can be switched using a simple configuration without providing any special members.

According to the fifth eighth aspect of the invention, manual release can be achieved using a simple configuration and operation, that is, by engaging the protrusion of the ball nut with the hook of the axial member.

Hereinafter, preferred embodiments of the present invention will be described with reference to the accompanying drawings.
FIG. 1 is a perspective view that schematically shows the overall configuration of a range switching device of a first embodiment;
FIG. 2(a) shows the internal configuration of a case member according to the first embodiment with an upper cover and an intermediate cover thereof removed, and FIGS. 2(b), (c) are sectional views of the case member 10 taken along line E-E and line F-F, respectively, of FIG. 2(a);
FIG. 3 is a longitudinal sectional view showing the configuration of a ball screw;
FIG. 4 shows the configuration of a detent lever;
FIG. 5(a) shows the internal configuration of a case member according to a second embodiment with an upper cover and an intermediate cover thereof removed, and FIGS. 5(b), (c) are sectional views of the case member 10 taken along line E-E and line F-F, respectively, of FIG. 5(a);
FIG. 6 illustrates the configuration of a third embodiment;
FIG. 7 illustrates the configuration of a conversion mechanism according to a fourth embodiment;
FIG. 8 is a perspective view that schematically shows the overall configuration of a range switching device according to a fifth embodiment;
FIG. 9 shows the internal configuration of a case member according to a sixth embodiment when an upper cover is cut through;
FIG. 10(a) shows the internal configuration of a case member according to the sixth embodiment with the upper cover and an intermediate cover thereof removed, and FIG. 10(b) is a view taken along line M-M of FIG. 10(a);
FIG. 11 is a sectional view taken along the line K-K of a range switching device according to the sixth embodiment;
FIGS. 12(a), (b) illustrate the configuration and operation of a manual release mechanism according to the sixth embodiment;
FIGS. 13(a), (b) illustrate the configuration and operation of an other manual release mechanism;
FIGS. 14(a), (b) illustrate the operation of the manual release mechanism shown in FIG. 13 when assembled in the case member;
FIGS. 15(a), (b) illustrate the configuration of a ball nut rotation stopper according to the sixth embodiment;
FIGS. 16(a), (b) illustrate the configuration of an other ball nut rotation stopper according to the sixth embodiment;
FIGS. 17(a), (b) illustrate the configuration of an other arm member;
FIGS. 18(a), (b) illustrate the configuration of yet an other arm member;
FIGS. 19(a), (b) illustrate the configuration of still an other arm member;
FIGS. 20(a), (b) illustrate the configuration of still yet an other arm member;
FIGS. 21(a), (b) illustrate the configuration of an arm member offering excellent space efficiency;
FIGS. 22(a), (b) illustrate the configuration of an other arm member offering excellent space efficiency;
FIG. 23 is a semi-exploded perspective view of the range switching device according to the sixth embodiment; and
FIG. 24 is a perspective view that schematically shows the overall configuration of a range switching device according to a seventh embodiment.

In the figures, structural members with the same configuration and operation are denoted with the same reference numerals, and a duplicated description thereof is omitted.

### First Embodiment

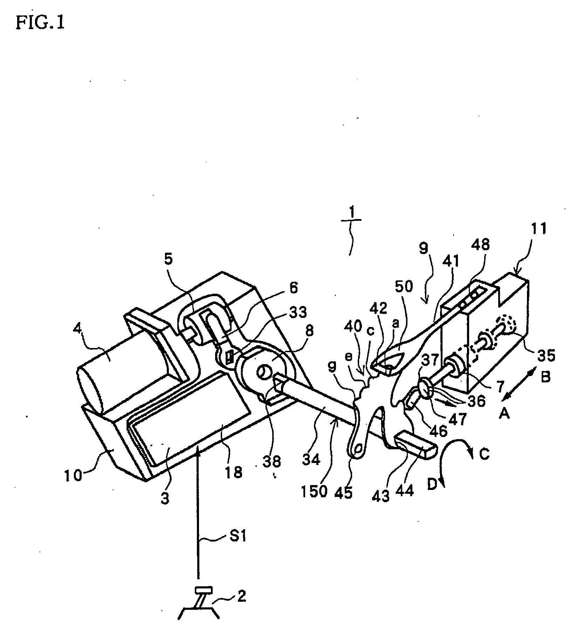

FIG. 1 shows a range switching device of a vehicle (hereinafter referred to simply as "range switching device") according to a first embodiment as an example of a range switching device according to the present invention. The figure is a perspective view that schematically shows the overall configuration of this range switching device 1.

The range switching device 1 is incorporated in an automatic transmission (for example, multi-step automatic transmission or continuously variable transmission (CVT)) that is mounted in a vehicle. As shown in FIG. 1, the main structural members of the range switching device 1 include a shift lever 2 which is a range selection unit which allows a vehicle driver to select a running range; a first control unit 3 for generating an electric signal (control signal) based on an electric signal (shift signal) S1 from the shift lever 2; a motor 4 which is controlled based on a control signal from the first control unit 3; a conversion mechanism 5 for converting rotary motion of the motor 4 to linear motion; an arm member 6 for converting the linear motion from the conversion mechanism 5 to a swinging motion; a spool 7 which is a range switching member moved by the arm member 6; a position sensor 8 which is a position detecting unit for detecting the position of the spool 7 through the arm member 6; and a detent mechanism 9 which positions and holds the spool 7. Of these main structural members, the first control unit 3, the conversion mechanism 5, the arm member 6, and the position sensor 8 are accommodated in the same case member 10 and the motor 4 is mounted to this case member 10. The spool 7 is disposed within a valve body 11 of the automatic transmission. According to this embodiment, an intermediate member 150, which acts as a power transmission member, is disposed between the conversion mechanism 5 and the spool (range switching member) 7. As shown in the example of FIG. 1, this intermediate member 150 is provided with the arm member 6, a range control shaft 34, described later, and a detent lever 40, described later.

Hereinafter, the details of the structural members will be described in order, starting with the shift lever 2.

Automatic transmission running ranges, namely, parking (P), reverse (R), neutral (N) and drive (D), are indicated on the shift lever (range selection unit) 2. The shift lever 2 is operated directly by a vehicle driver, and any one of the above described running ranges can be selected. Then, a shift signal S1 corresponding to the selected running range is generated. Any range selection unit other than the shift lever 2 may be used so long as it can reflect the intention of the vehicle driver, that is, so long as the shift signal S1 corresponding to the running range selected by the vehicle driver can be generated. For example, a shift button, a shift switch, a voice input device, or the like, may be used.

The first control unit 3 generates a control signal based on the shift signal S1 generated by the above described shift lever 2, and this control signal is used to control rotation of the motor 4. Further, a detection signal from the position sensor 8 for detecting the position of the spool 7 is inputted to the first control unit 3. The first control unit 3 controls a rotation direction of the motor 4 and a rotation start/stop timing based on this detection signal. The first control unit 3 is a control unit which switches the running range by controlling the operation of the spool 7 with the motor 4 based on the shift signal S1 from the shift lever 2, that is, a control unit (SBW-CU) for controlling a so-called shift-by-wire system (SBW). This first control unit 3 is disposed within the case member 10.

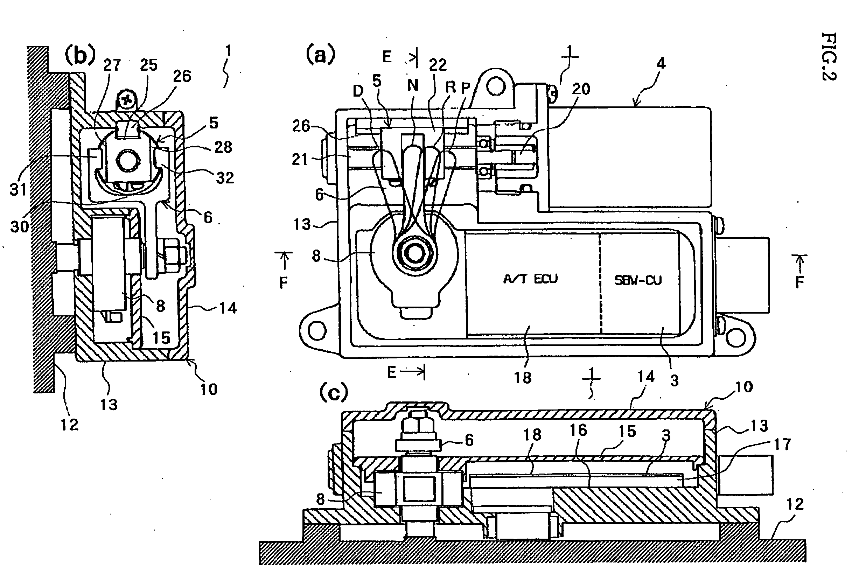

Next, the case member 10 and the internal configuration thereof will be described with reference to FIGS. 2(a), (b), (c). The case member 10 includes a case main body 13 which is fixed on a part 12 (an A/T case) of the automatic transmission; an upper cover 14 that covers this case main body 13 from above; and an intermediate cover 15 that covers a section inside of the case main body 13. FIG. 2(a) shows a state when the upper cover 14 and intermediate cover 15 are removed. FIGS. 2(b), (c) are sectional views of the case member 10 taken along the lines E-E and F-F, respectively, in FIG. 2(a). As shown in these diagrams, the above described first control unit 3 is installed on a rectangular base 17 provided on a bottom 16 of the case main body 13. According to this embodiment, a second control unit 18 that acts as an A/T ECU (automatic transmission electronic control unit) for controlling the entire automatic transmission is also installed on the base 17. It should be noted that the first and second control units 3 and 18 may be constructed on different substrate that are positioned in a row on the same base 17 as shown in FIG. 2(c), or may be constructed in different regions of the same substrate which is then disposed on the base 17. If both the control units 3 and 18 are constructed on the same substrate, a wire harness for inter-connection thereof can be omitted, and the number of steps required for assembling the range switching device 1 can be reduced.

As shown in FIG. 2(a), the motor 4 is installed to the outside of the case member 10 by insertion of an output shaft 20 thereof into the case member 10. A DC motor having a permanent magnet is used for the motor 4, and a rotation direction, rotation time and rotation timing thereof are controlled by the above described first control unit 3.

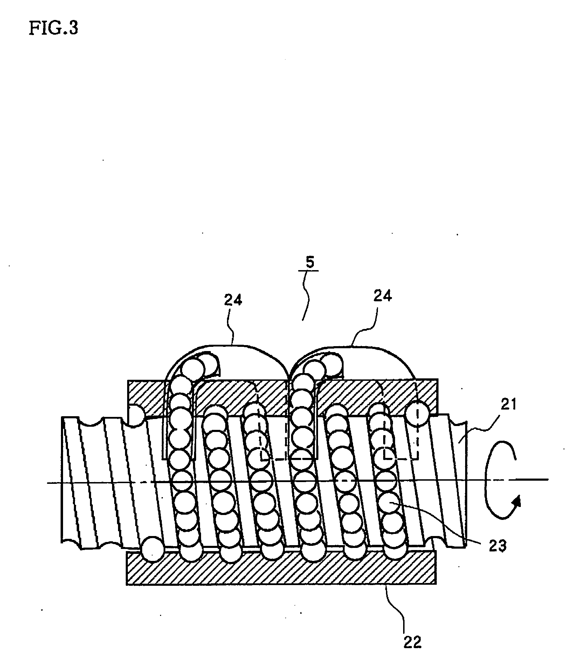

According to this embodiment, a ball screw is adopted as the conversion mechanism 5. As shown in FIG. 3, the ball screw includes a ball screw shaft 21 which is driven by the motor 4; a ball nut (nut member) 22 which is engaged with the ball screw shaft 21 so as to be movable in the axial direction; and a plurality of balls 23 that are interposed between the ball screw shaft 21 and the ball nut 22. The ball nut 22 is engaged such that it is (a) incapable of rotating and (b) capable of axial direction movement with respect to the rotation of the ball screw shaft 21. When the ball screw shaft 21 is rotated, balls 23 circulate within a tube 24 integrated with the ball nut 22, thus causing the ball nut 22 to move in the axial direction. As shown in FIG. 1 and FIGS. 2(a), (b), the ball nut 22 is formed to be generally cylindrically and a guide groove 25 is formed along the axial direction on the rear side (the upper side in FIG. 3(a)) thereof.

A guide rail 26 formed in parallel to the ball screw shaft 21 inside the case main body 13 is moveably fitted to this guide groove 25 as shown in FIGS. 2(a), (b). Consequently, rotation of the ball nut 22 is prevented. Grooves (engagement grooves) 27 and 28, which are perpendicular to the ball screw shaft 21, are formed in upper and lower sections of the ball nut 22. Part of the arm member 6, which will be described later, engages with these grooves 27 and 28. With the configuration of this embodiment, not only is the ball nut 22 moved in the axial direction by the rotation of the ball screw shaft 21, but also the ball screw shaft 21 can be rotated with relative ease by movement of the ball nut 22 in the axial direction. "Relatively ease" as used here means as easily as the ball screw shaft 21 is rotated by an operation of the detent mechanism 9, described later. Further, according to this embodiment, the conversion mechanism 5 is configured such that rotary motion is converted to linear motion, and conversely linear motion is converted to rotary motion. Note that, for example, increasing an angle of a screw groove of the ball screw shaft 21 allows linear motion of the ball nut 22 to be more easily converted to rotary motion of the ball screw shaft 21.

The arm member 6 has a two-branch section 30 with a distal end that is divided into an upper section and a lower section. Cylindrical protrusions 30 and 31, which engage with the grooves 27 and 28 in the above described ball nut 22, are formed in the distal end of the two-branch section 30. A rectangular through hole 33 is made in a base end section of the arm member 6 as shown in FIG. 1. One end section of the range control shaft 34, which will be described later, is fitted into this through hole 33. When the ball nut 22 moves in the axial direction, a tip end of the arm member 6 swings with respect to the through hole 33, such that this swinging motion rotates the range control shaft 34 via the through hole 33. Note that, reference letters P, R, N, D shown in FIG. 2(a) indicate positions of the arm member 6 that correspond, in order, to ranges P, R, N, D of the shift lever 2. In other words, if for example the P range is selected, the arm member 6 is located at the position indicated by P, as a result of which the spool 7 is located at the position P.

As shown in FIG. 1, the spool (range switching member) 7 constitutes part of a manual valve 35 disposed within the valve body 11. The spool 7 is supported so as to be freely movably in the axial direction (the directions of arrows A, B), and when the spool 7 is moved in the axial direction, a hydraulic path within the valve body 11 is changed so as to set a predetermined running range. That is, the spool 7 can be moved to the position P corresponding to the P range, a position R corresponding to the R range, a position N corresponding to the N range, and a position D corresponding to the D range. Two discs 36 and 36 are fixed to a distal end of the spool 7 and an engagement groove 37 is formed between these discs 36 and 36. The detent lever 40, described later, is engaged with this engagement groove 37.

As already described with reference to FIGS. 2(a) to (c), the position sensor 8 is disposed inside the intermediate cover 15 inside the case member 10. The range control shaft 34 goes through the center of this position sensor 8. As the position sensor 8, for example, a potentiometer may be used, which outputs a voltage corresponding to a rotation angle of the range control shaft 34. A rectangular prism shaped fitting section 38 is formed at an end section of the range control shaft 34 and this fitting section 38 is fitted into the rectangular through hole 33 in the above described arm member 6.

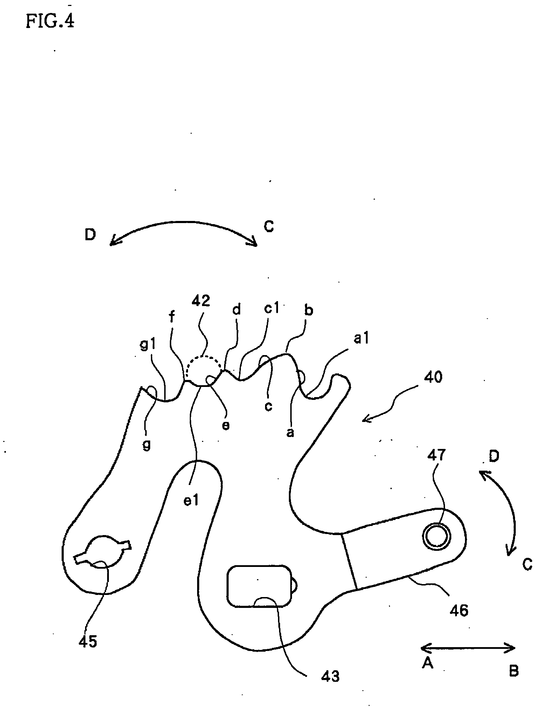

As shown in FIG. 1, the detent mechanism 9 includes the detent lever (detent member) 40, a detent spring 41 and a roller 42. The detent lever 40 is a plate-like member as shown in FIG. 1; a rectangular through hole 43 is formed in a lower section thereof, and a rectangular prism-shaped fitting section 44 formed at the other end of the range selection shaft 34 is fit into this through hole 43. The detent lever 40 swings in the directions of arrows C and D, with the range selection shaft 34 as a swing center. A through hole 45, which part of a parking mechanism (not shown) engages, is provided in a left lower section of the detent lever 4, as shown in FIG. 4. Additionally, an arm section 46 is formed at a right lower section thereof as shown in FIG. 4, such that the arm section 46 points to the right, and a pin 47 is formed so as to protrude from the arm section 46.

This pin 47 engages with the engagement groove 37 formed between the two discs 36 and 36 of the spool 7. The detent lever 40 has four range grooves a, c, e and g formed in order (from the right of FIG. 1) in a top section thereof, as selection regions. Further, convex sections b, d and f are formed between each of these range grooves a, c, e and g. The range grooves a, c, e and g, described above, basically correspond to the four positions of the spool 7, namely, the positions P, R, N and D. "Basically" is used here to indicate the fact that the range grooves a, c, e and g are regions having a given width (selection regions) and thus, strictly speaking, selection positions a1, c1, e1 and g1 in these range grooves a, c, e and g correspond to the positions P, R, N, D of the spool 7. The selection positions a1, c1, e1 and g1 will be described following an explanation of the detent spring 41.

The detent spring 41 is formed as a generally rectangular member and as shown in FIG. 1, is provided with a base end 48 which is fixed to the valve body 11a and a two-branch section 50 which is formed at a distal end thereof. A roller 42 is supported so as to be freely rotatably in the two-branch section 50. As a whole, the detent spring 41 acts as a leaf spring, so that the roller 42 disposed rotatably at the distal end is pressed against the inclined faces of each of the range grooves a, c, e and g in the detent lever 40, thereby accurately positioning and holding the detent lever 40. That is, when the roller 42 at the distal end of the detent spring 41 is positioned within the range groove a in the detent lever 40 and the detent lever 40 is capable of swinging with relative ease, the detent lever 40 is positioned in the selection position a1 by an urging force of the roller 42 resulting from elastic force of the detent spring 41.

In other words, in the case that the detent lever 40 is maintained in a swinging-enabled state and the roller 42 is positioned within the range groove a, the selection position a1 is a point at which the range groove a makes contact with the roller 42 when the detent lever 40 is moved and then held by the urging force of the roller 42. Likewise, in the case that the detent lever 40 is maintained in the swinging-capable state and the roller 42 is disposed within the range groove c, the selection position c1 in the range groove c is a point at which the range groove c makes contact with the roller 42 when the detent lever 40 is moved and then held by the urging force of the roller 42. Moreover, the selection position e1 set in a part of the range groove e and the selecting position g1 set in a part of the range groove g are set in the same way as the above described selection positions a1 and c1, and thus a description thereof is omitted.

The selection positions a1, c1, e1 and g1 set in the above ways correspond exactly, in this order, to the positions P, R, N and D of the spool 7. Reference positions for rotating (swinging) in the directions of arrows C and D are set in the detent lever 40, and the relation between the angles from the reference position to the selection positions a1, c1, e1 and g1 and the convex sections b, d and f, and the magnitude of an output voltage from the position sensor 8 corresponding to each angle is memorized in the first control unit 3.

With this embodiment, as described above, the configuration is such that the swinging motion (rotary motion) of the detent lever 40 in the directions of arrows C and D and the moving motion of the spool 7 in the directions of arrows A and B are inter-linked, that is, the positions of the detent lever 40 corresponds in a one-to-one manner with the positions of the spool 7. Given this, the spool 7 is controlled accurately by accurately controlling the detent lever 40 without controlling the position of the spool 7 directly.

Next, the operation of the range switching device 1 with the above configuration will be described using the example of switching from the P range to the R range.

When the P range is selected, the roller 42 of the detent mechanism 9 is positioned at the selection position a1 within the range groove a in FIG. 4. If the vehicle driver switches the shift lever 2 from the P range to the R range, a shift signal S 1 corresponding thereto is inputted to the first control unit 3. The motor 4 is rotated by the first control unit 3 so that the ball screw shaft 21 is rotated. Due to this rotation, the ball nut 22 is moved in the leftward direction of FIG. 2(a). Along with this, the arm member 6 swings in the leftward direction. Consequently, the detent lever 40 is rotated in the direction of arrow C by the range control shaft 34, so that the spool 7 is moved in the direction of arrow B. When the output voltage of the position sensor 8 reaches a value that corresponds to the convex section b in FIG. 4, the first control unit 3 stops the rotation of the motor 4. As a result, the roller 42 moves from the range groove a, passes over the convex section b, and enters the range groove c.

If the motor 4 is stopped, the detent lever 40 is rotated by the urging force of the roller 42 that is generated by the elastic force of the detent spring 41. The roller 42 is positioned and held accurately in the selection position c1 within the range groove c by this rotation. Consequently, the spool 7 that was located at the position P is accurately positioned at the position R. If the motor 4 is stopped and the detent lever 40 is rotated by the action of the detent mechanism 9, the ball nut 22 is moved in the axial direction by the range control shaft 34 and the arm member 6, so that the ball screw shaft 21 is rotated.

In this way, with the range switching device 1 of this embodiment, when the spool 7 is moved from the position P to the position R in accordance with the vehicle driver switching the running range from the P range to the R range, control of the motor 4 is executed until the convex section b passes the roller 42 such that the roller 42 enters the range groove c. After this, the roller 42 that is located within the range groove c is positioned and held at the selection position c1 by pulling action of the detent mechanism 9. Consequently, the spool 7 can be accurately disposed at the position R, which corresponds to the selected traveling range R, using a simple configuration and control.

It should be noted that selection of other running ranges is carried out in the same way.

According to this embodiment, the conversion mechanism 5 is configured from a ball screw and further, the conversion mechanism 5 also includes the arm member 6. Thus, as compared to the conventional example in which the conversion mechanism is configured from a plurality of gears, the configuration necessary for deceleration is simplified, thereby reducing the overall size of the range switching device 1. Further, because the arm member 6 converts the linear motion in the axial direction of the ball nut 22 to the swinging motion, a large reduction ratio can be achieved. Further, the reduction ratio can be changed by changing the length of the arm member 6, which can be carried out simply.

Moreover, according to this embodiment, the first and second control units 3 and 18, which are electronic components, are disposed within the case member 10 together with the position sensor 8, which is also an electronic component, and are covered by the intermediate cover 15. In other words, a double cover configuration is provided. Consequently, the first and second control units 3 and 18 and the position sensor 8 are separated by the intermediate cover 15 from movable components such as the conversion mechanism 5, the arm member 6, and the like, which are disposed outside of the intermediate cover 15 but within the same case member 10. Thus, lubricant and dust from the movable components can be effectively prevented from coming into contact with the first and second control units 3, 18 and the position sensor 8. By positioning the first and second control units 3, 18 and the position sensor 8 in the vicinity of each other as described above, the length and quantity of the wire harnesses required for connecting these members can be minimized, thereby simplifying the wiring system. Consequently, reductions in component cost and assembly cost and space saving are achieved and further, the impact of electromagnetic noise caused by the wire harness being long can be reduced.

### Second Embodiment

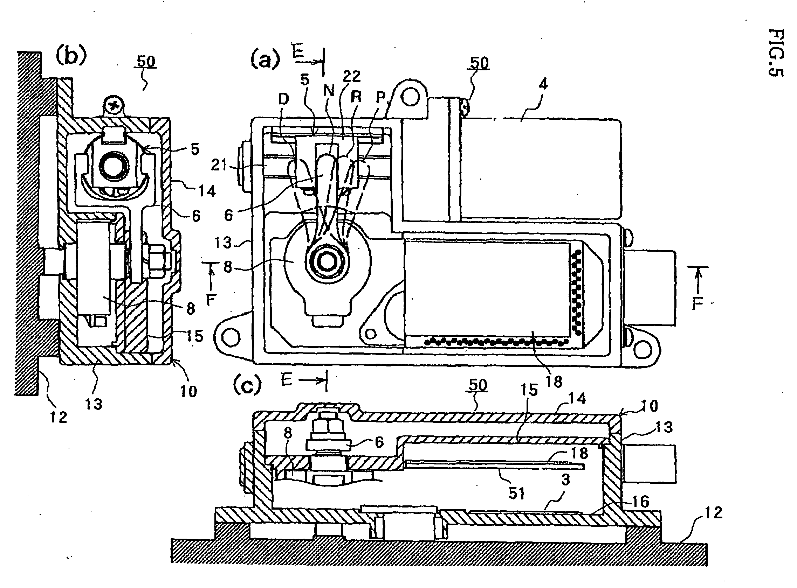

FIGS. 5(a), (b), (c) show a range switching device 50 according to this embodiment. These figures correspond to FIGS. 2(a), (b), (c), in that order. Structural members that are the same as those shown in FIGS. 2(a), (b), (c) are denoted with the same reference numerals, and a description thereof is omitted.

With this embodiment, a configuration is adopted in which the first control unit 3 (the SBW-CU) and the second control unit 18 (the A/T ECU) are positioned in an upper-lower two level form.

The first control unit 3 is positioned on the bottom section 16 of the case main body 13 of the case member 10 and the second control unit 18 is disposed on a supporting member 51 that is disposed above the first control unit 3. The first control unit 3 is positioned such that it is completely overlapped by the second control unit 18.

With this embodiment, as compared to the case of side by side arrangement, the occupied area can be reduced by an amount equivalent to the overlapping area of the first and second control units 3 and 18. Additionally, the first control unit 3 can be provided in addition to the second control unit 18 that is conventionally used, without the need for large changes in design and arrangement. As a result, a conventional range switching device can be used effectively.

Further, in this embodiment as well, the first and second control units 3 and 18 and the position sensor 8 are disposed inside the intermediate cover 15 in the same manner as the first embodiment.

### Third Embodiment

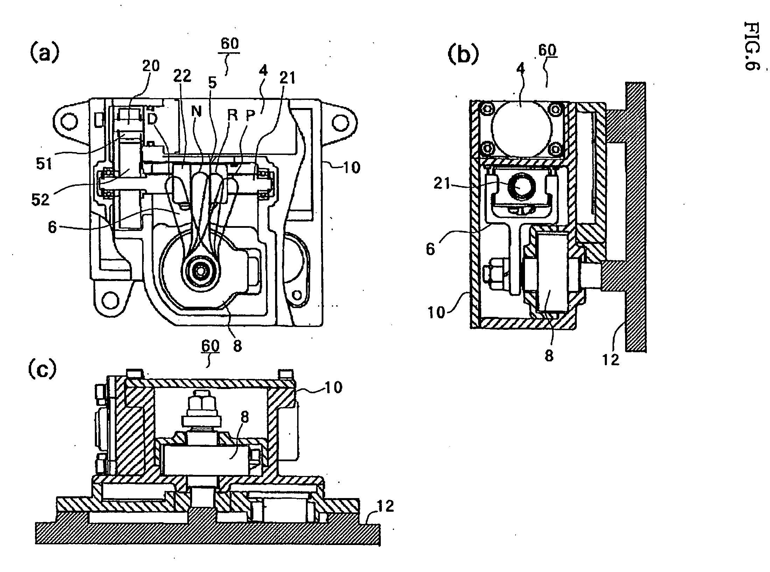

FIGS. 6(a), (b), (c) show a range switching device 60 according to this embodiment. In the range switching device 60 shown in FIG. 6, spur gears 52a and 52b are interposed between the output shaft 20 of the motor 4 and the ball screw shaft 21 of the conversion mechanism 5.

The spur gear 52a, which has a small diameter, is fitted to the output shaft 20 of the motor 4, while the spur gear 52b, which has a large diameter, is fitted to the ball screw shaft 21. The spur gears 52a and 52b are meshed with each other.

Consequently, the gear ratio can be increased, whereby the size of the motor 4 can be reduced.

### Fourth Embodiment

In the above described first to third embodiments, examples in which a ball screw is utilized as the conversion mechanism 5 are explained.

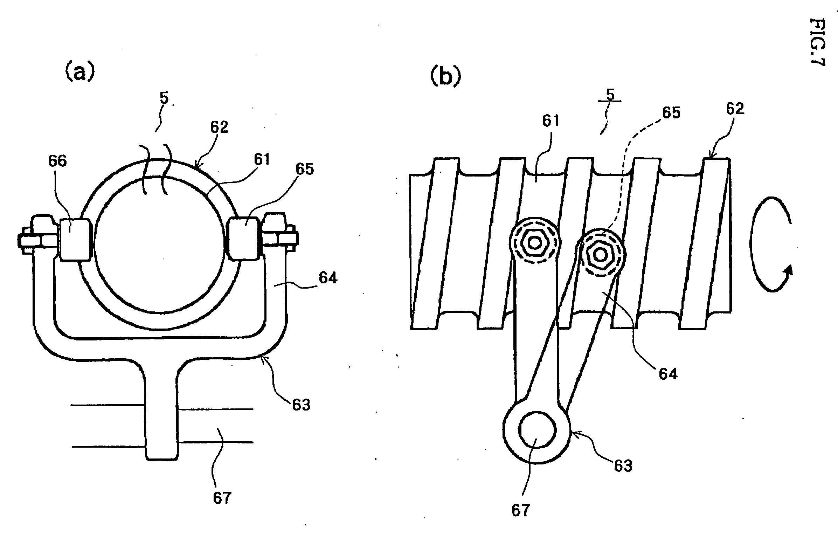

According to the fourth embodiment, a combination of a cam and a cam follower is used for the conversion mechanism 5 as shown in FIGS. 7(a), (b).

As shown in FIG. 7, the conversion mechanism 5 includes a shaft-shaped cam member 62 having a spiral cam groove 61; and two roller shaped cam followers 65 and 66 that are rotatably supported by a two-branch section 64 provided at a distal end of an arm member 63. These two cam followers 65 and 66 engage with the cam groove 61 of the cam member 62 at opposite sides to each other. The arm member 63 is supported by a shaft 67 such that it is capable of swinging.

With the conversion mechanism 5 having the above described configuration, when the cam member 62 is rotated, the two cam followers 65 and 66 roll along the spiral cam groove 61 so that the arm member 64 swings with respect to the shaft 67.

According to this embodiment, a configuration is provided having an extremely small friction coefficient, like the conversion mechanism 5 of the first to third embodiments that use a ball screw. Further, since structural members corresponding to the ball nut 22 and the balls 23 are unnecessary, as compared to the configuration of the first to third embodiments, the configuration can be simplified to this extent. The operation and effects are substantially the same as the first to third embodiments.

### Fifth Embodiment

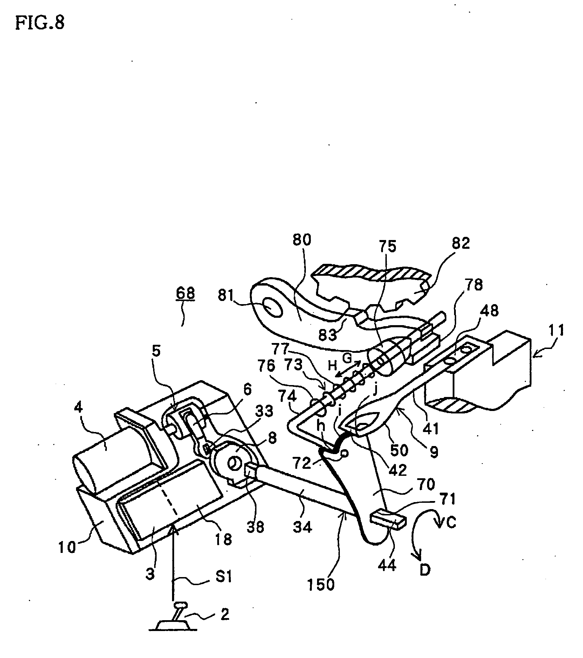

FIG. 8 shows a range switching device 68 of the present invention. This embodiment illustrates an example of when the range switching device of the present invention is applied to a parking mechanism. Note that, structural members that are the same as those of the first embodiment are denoted with the same reference numerals, and a description thereof is omitted.

According to the first embodiment described above, the range switching member which is moved by the arm member 6 is the spool 7, which corresponds to the four positions, namely, positions P, R, N and D. In contrast to this, according to this embodiment, the range switching device is a parking mechanism 73, which is constructed so as to correspond to two positions, namely, a position P (a lock position) and a non-P position (for example, a release position).

According to this embodiment, the configuration of the detent lever 70 that constitutes the detent mechanism 9 is different to that of the detent lever 40 of the first embodiment. The detent spring 41 and the roller 42, which are other components of the detent mechanism 9, are the same as those of the first embodiment.

With the detent lever 70 of this embodiment, as shown in FIG. 8, a rectangular through hole 71 is formed in a lower section thereof. The rectangular prism fitting section 44 formed at the other end of the range control shaft 34 is fit into this through hole 71. A through hole 72 that a parking rod 74 of a parking mechanism 73, which will be described later, engages, is formed in a top section of the detent lever 70. Range grooves h and j are provided in the top edge of the detent lever 70 as two selection regions. Further, a convex section i is formed between these range grooves h and j. The above described range grooves h and j basically correspond to the lock position and the release position of the parking rod 74, which will be described later. Here, "basically correspond" indicates the fact that the range grooves h and j are regions (selection regions) having a given width, and that, speaking strictly, selection positions h1 and j1 (not shown) set in part of these range grooves h and j correspond to the lock position and the release position of the parking rod 74. Because the relationship of the range grooves h and j and the selection positions h1 and j1 is the same as the relationship of the range grooves a, c, e and g and the selection positions a1, c1, e1 and g1 of the first embodiment, a description thereof will be omitted. Note that, a reference position for when the detent lever 70 rotates (swings) in the directions of arrows C and D is set, and the relationship between the angle from this reference position to the selection positions h1 and j1 and the convex section I, and the magnitude of an output voltage from the position sensor 8 corresponding to each angle is memorized in the first control unit 3.

As shown in FIG. 8, the parking mechanism 73 includes a parking rod 74 having a proximal end that is bent in the shape of letter L and which engages the detent lever 70; a conical wedge 75 (lock member) which is fitted to a distal end of the parking rod 74 such that it is capable of moving; a spring (compression spring) 77 which is connected to a flange section 76 fixed on the parking rod 74 and the wedge 75; a support 78 disposed below the distal end of the parking rod 74; and a parking pole 80 which is capable of swing freely so that the wedge 75 is inserted into or removed from between the support 78 and the parking pole 80. The parking pole 80 is disposed such that it is capable of swinging freely in a substantially vertical direction with respect to an axis point 81 at the proximal end. A pawl 83 capable of engaging with and disengaging from a parking gear 82 fixed on an output shaft (not shown) of the automatic transmission is provided so as to protrude from the upper side of the parking pole 80.

Next, as an example, the operation of the parking mechanism 73 when the range is switched from the non P range to the P range by the shift lever 2 will be described. When the P range is selected, the detent lever 70 is rotated in the direction of arrow C by rotation of the motor 4 via the conversion mechanism 5, the arm member 6 and the range control shaft 34. Consequently, the parking rod 74 is moved in the direction of arrow G. At this time, the flange section 76 that is integrally formed with the parking rod 74 urges the wedge 75 in the direction of arrow G via the spring 77. As a result of this urging force, the wedge 75 is inserted in between the support 78 and the parking pole 80, thereby pushing up the parking pole 80 such that the pawl 83 engages with the parking gear 82. At this time, if the pawl 83 comes into contact with a protruding tooth of the parking gear 82, the wedge 75 cannot be inserted between the support 78 and the parking pole 80, and thus the wedge 75 remains in a waiting position where it is urged by the spring 77. If the vehicle wheels move slightly in this condition, the parking gear 82 is rotated, and the pawl 83 enters into a tooth recess portion of the parking gear 82, thereby achieving parking lock.

In order to release the parking lock, the shift lever 2 is used to select the non P range instead of the P range, whereby the detent lever 70 is rotated in the direction of arrow D by the motor 4, the conversion mechanism 5, the arm member 6, and the like. Consequently, the parking rod 34 is moved in the direction of arrow H, so that the wedge 75 is pulled out from between the support 78 and the parking pole 80. As a result, the parking pole 80 swings downward, such that the pawl 83 is pulled out of the tooth recess portion in the parking gear 82. With this, lock release is completed.

As the conversion mechanism 5 of this embodiment, for example, a ball screw like that shown in FIG. 3, or a combination of the cam member 62 with the cam followers 65 and 66 shown in FIG. 7 may be used.

According to the range switching device 68 of this embodiment, when the parking rod 74 is moved from the release position to the position P in accordance with the vehicle driver switching the running range from the non P range to the P range, control of the motor 4 is executed until the convex section i of the detent lever 70 passes the roller 42 such that the roller 42 enters the range groove h. Following this, the roller 42 located in the range groove h is positioned and held at a selection position (not shown) due to the pulling action of the detent mechanism 9. Thus, the parking rod 74 can be accurately positioned at the position P, which corresponding to the P range which is the selected running range.

In this embodiment, as described above, the range switching device of the present invention is only used for switching between two positions, namely, the lock position (position P) and the release position (the non-P position). In this case, as described above, the parking mechanism 73 corresponds to the range switching device. It should be noted that, in this example, the selection of the running ranges N, D and R is carried out by another mechanism.

### Sixth Embodiment

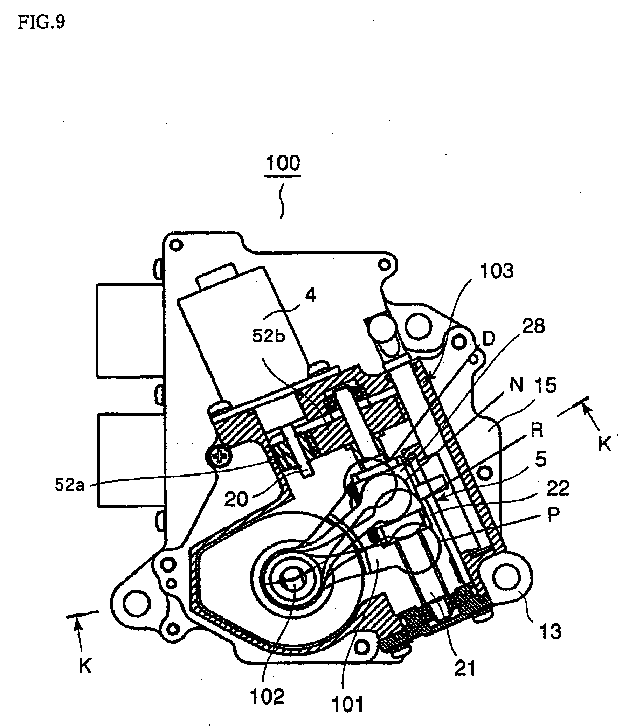

The internal configuration of the case member 10 of a range switching device 100 according to this embodiment will be described with reference to FIGS. 9, 10(a), (b) and 11. In the description below, structural members having the same configuration and operation as those of first to fifth embodiments are denoted with the same reference numerals, and a description thereof is omitted.

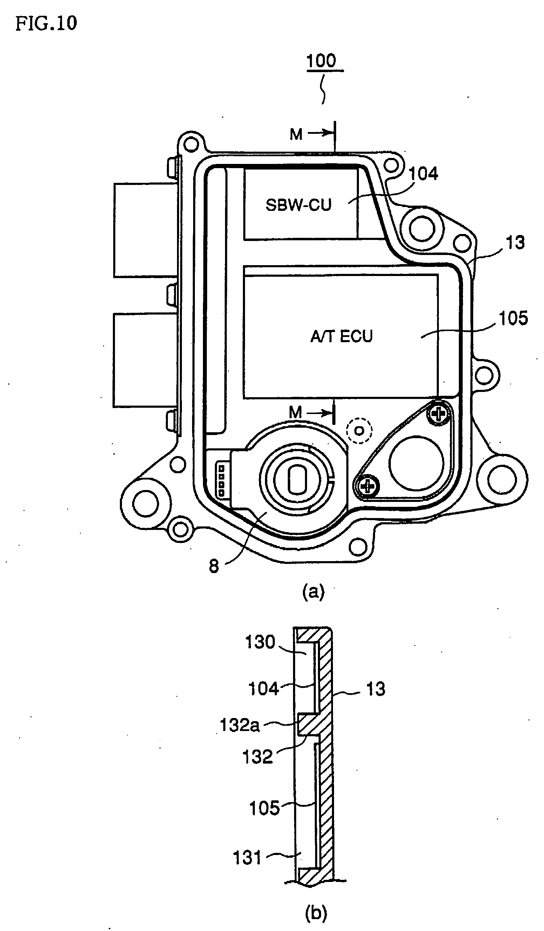

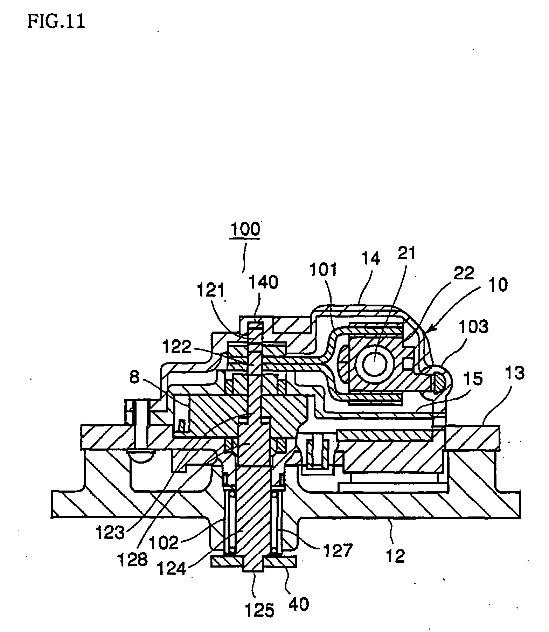

With regard to FIGS. 9 to 11; FIG. 9 is a view of the case member 10, which includes the case main body 13, the intermediate cover 15 and the upper cover 14, as seen from the side of the upper cover 14 when the upper cover 14 is cut off; FIG. 10 is a view of the internal configuration as seen from the side of the upper cover 14 when the upper cover 14 and the intermediate cover 15 are removed; and FIG. 11 is a perspective view taken along the line K-K of FIG. 9. Note that, FIG. 11 illustrates a state when the upper cover 14 is attached, rather than cut off as in FIG. 9.

The case member 10 of the range switching device 100 shown in these figures includes the case main body 13 fixed on the A/T case 12, the upper cover 14 that covers this case main body 13 from above, and the intermediate cover 15 that covers a section inside of the case main body 13.

As shown in FIG. 9, the motor 4 is installed outside the case member 10 such that the output shaft 20 thereof is inserted into the case member 10. A small spur gear 52a is fixed on this output shaft 20 and a large spur gear 52b fixed on the ball screw shaft 21 is engaged with the spur gear 52a. Accordingly, respective forward and reverse rotations of the motor 4 are decelerated by these spur gears 52a and 52b and transmitted in the form of normal and reverse rotations, respectively, of the ball screw shaft 21. The ball nut 22 that meshes with the ball screw shaft 21 via the balls 23 (see FIG. 3) is moved in one or another direction along the length direction of the ball screw shaft 21 by the normal/reverse rotation of the ball screw shaft 21. The ball nut 22 is provided with a rotation stopper described hereinafter, which is different to that described previously.

The grooves 27 and 28 (groove 27 is not shown in FIGS. 9 to 11) are formed in the aforementioned ball nut 22 and the distal ends of an arm member 101 (which is different to that according to the above described embodiment and which will be described later) engage with these grooves 27 and 28. A range control shaft 102 (which is different to that according to the above described embodiment and which will be described later) is fitted to a proximal end of the arm member 101. When the ball nut 22 moves along the ball screw shaft 21, the arm member 101 swings with respect to the proximal end of the arm member 101 so that the range control shaft 102 rotates. As described with regard to FIG. 1, the spool 7 is moved in the directions of arrows A or B by the rotation of this range control shaft 102.

Further, with this embodiment as well, a manual release mechanism 103, described later, is provided to ensure switching of the running range even if a failure occurs in the motor or the like.

Further, according to this embodiment, the configuration and housing method of a first control unit 104 (an SBW CU) and a second control unit 105 (an A/T ECU) that control the rotation of the motor 4 are different from those according to the above described embodiments.

Hereinafter, five features (points (1) to (5) below) of this embodiment that are different from the first to fifth embodiments will be described in order.

### (1) Manual release mechanism

According to this embodiment, the range switching device 100 includes a manual release mechanism 103 as an auxiliary switching unit. With the configurations of the previous embodiments, the ball screw shaft 21 cannot be rotated if a trouble (failure) such as breakage or short-circuit occurs in the motor 4, which is the driving power source, whereby the running range cannot be switched.

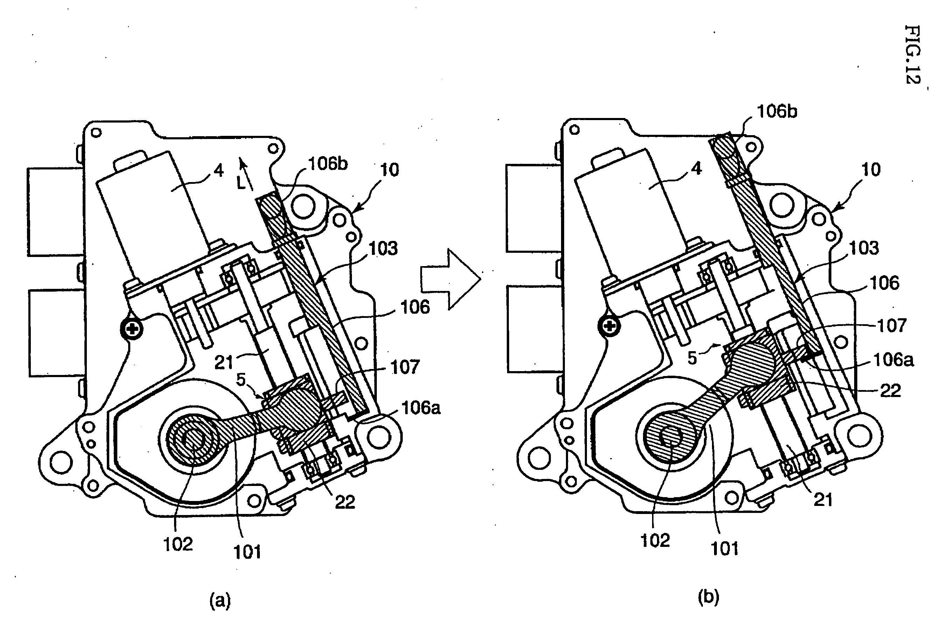

To address this, this embodiment includes the manual release mechanism 103 as shown in FIGS. 12(a), (b).

The manual release mechanism 103 shown in these figures includes a release rod 106 which is disposed in parallel to the ball screw shaft 21 and which is supported by the case member 10 so as to be movably in the length direction; and a protrusion 107 which is formed so as to protrude from the ball nut 22. A hook (engagement section) 106a which is capable of engaging the protrusion 107 is provided at a distal end section of the release rod 106. Further, a wire (not shown) capable of pulling the release rod 106 in the direction of arrow L is connected to a proximal end section 106b.

If, for example, the motor 4 fails to operate when the P range is selected, namely, when the state shown in FIG. 12(a) exists, the motor 4 is incapable of swinging the arm member 101 via the ball screw shaft 21 and the ball nut 22, and the like, and thus the running range cannot be changed over.

In this case, the release rod 106 is moved in the direction of arrow L due to the aforementioned wire being pulled, and the ball nut 22 is moved in the direction of arrow L as a result of the hook 106a of the release rod 106 being hooked onto the protrusion 107 of the ball nut 22. As a result of this movement, the arm member 101 whose distal end section engages the ball nut 22 is swung and forcibly moved to a position that corresponds to the range N as shown in FIG. 12(b).

According to the above described manual release mechanism 103, the ball nut 22 is driven by the release rod 106. Thus, a release weight (the force which pulls the wire) and a release stroke can be set appropriately depending on the length of the arm member 101, and a compact configuration can be provided.

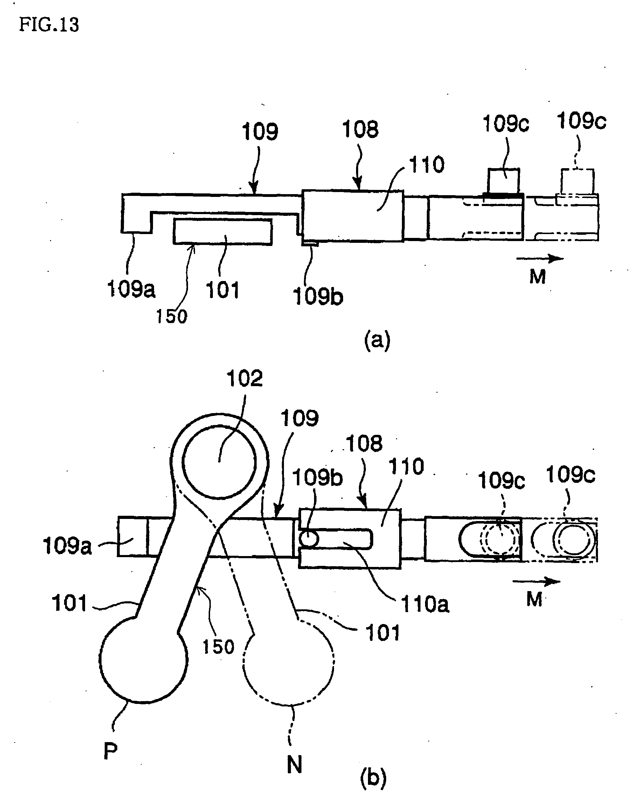

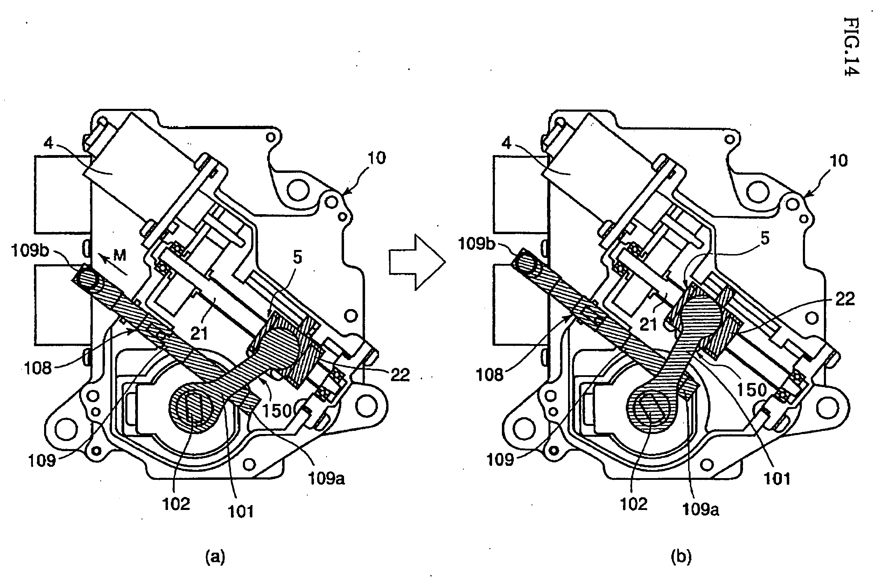

FIGS. 13(a), (b) show another example of a manual release mechanism. FIGS. 14(a), (b) illustrate the operation when this manual release mechanism 108 (auxiliary switching unit) is incorporated in the case member 10. As shown in FIGS. 13(a), (b), the manual release mechanism 108 moves the arm member 101 directly instead of the ball nut 22. The manual release mechanism 108 includes a release rod 109 and a guide sleeve 110 that supports an intermediate section of the release rod 109 such that the release rod 109 is movably in the length direction. A hook (engagement section) 109a capable of engaging the intermediate section in the length direction of the arm member 101 is formed at a distal end section of the release rod 109. A convex section 109b, which functions as a rotation stopped for the release rod 108, is provided so as to protrude at an intermediate section of the release rod 109 such that it is capable of movement along a groove 110a formed in the guide sleeve 110 having an open distal end. Further, a wire similar to the one described previously (not shown), namely, a wire capable of pulling the release rod in the direction of arrow M, is connected to a proximal end section 109c of the release rod 109.

If a failure occurs in the motor 4 (see FIG. 12) when the P range is selected, that is, when the arm member 101 is located at the position indicated by the solid line in FIGS. 13(a), (b) and the solid line in FIG. 14(a), the arm member 101 cannot be swung by the motor 4 via the ball screw shaft 21 and ball nut 22, and the like, as a result of which switching of the running range cannot take place.

In this case, the release rod 109 is moved in the direction of arrow M by the aforementioned wire being pulled, so that the hook 109a of the release rod 109 is hooked on the arm member 101, whereby the arm member 101 is swung. Consequently, the arm member 101 can be forcibly moved to the position indicated by the dotted line in FIGS. 13(a), (b) and the solid line in FIG. 14(b).

According to the manual release mechanism 108 described above, the object driven by the release rod 109 is the arm member 101. Accordingly, the manual release mechanism 108 can be disposed freely regardless of the position of the ball nut.

### (2) Ball nut rotation stopper

According to the first embodiment, as shown in FIG. 2, stopping of the rotation of the ball nut 22 is achieved by fitting the guide groove 28 formed in the ball nut 22 to the guide rail 26 such that it has a degree of play.

However, this configuration suffers from the problem that the configurations of the guide rail 26 and the case member 20 to be installed thereon are complicated, thereby requiring a number of processing steps.

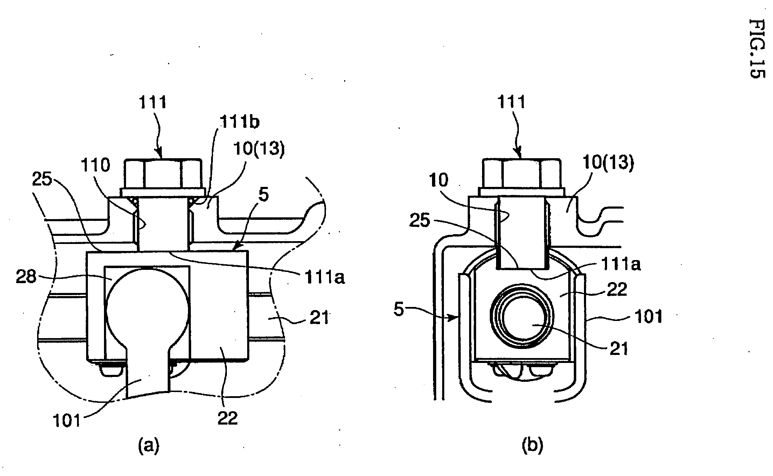

Thus, according to this embodiment, as shown in FIGS. 15(a), (b), a rotation stopping unit for the ball nut 22 is configured by: providing a bolt hole 110 in the case member 10, and fastening a bolt (pin-like member) 111 into this bolt hole 110, such that a distal end section 111a of the bolt 111 is fitted into the guide groove 25 in the bolt nut 22 with a degree of play. By mounting a seal ring 111b between the case member 10 and the bolt 111, the inside of the case member 10 is sealed.

As compared to the case where the aforementioned guide rail 26 is used, the configuration is simplified, whereby a reduction in the quantity of processing steps is possible.

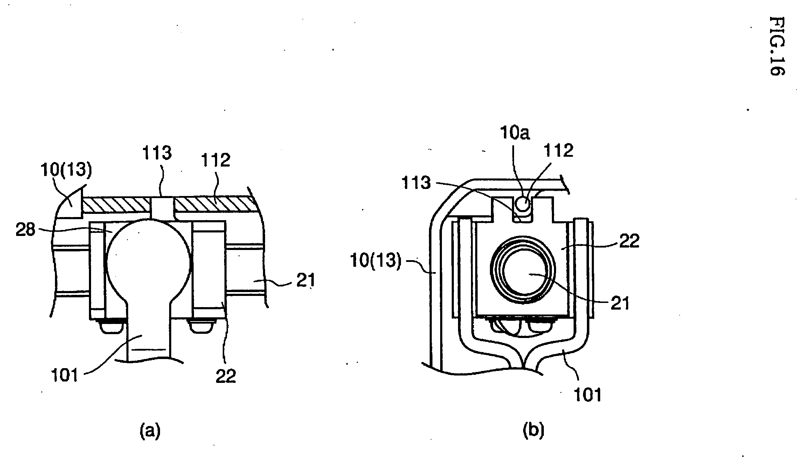

FIGS. 16(a), (b) show an other example of the ball nut rotation stopper (the rotation stopping unit). As shown in FIGS. 16(a), (b), a rotation stopper for the ball nut 22 is configured by; providing a hole 10a in the case member 10, and inserting a long pin (engagement member) 112 that runs in parallel with the ball screw shaft 21 into this hole 10a such that the pin 112 is fitted with a degree of play into a guide groove 113 in the ball nut 22. Because this configuration is realized by simply inserting the pin 112 into the hole 10a, as compared to the above described configuration, the need for providing a bolt hole in the case member 10 is eliminated, whereby the special seal ring 111b (see FIG. 15(a)) becomes unnecessary.

### (3) Arm member

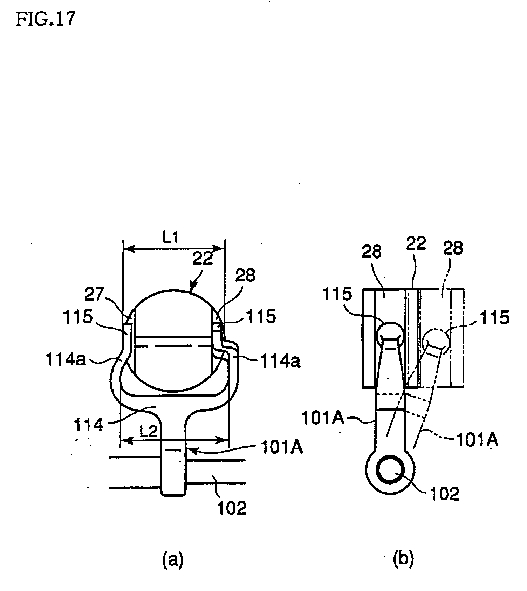

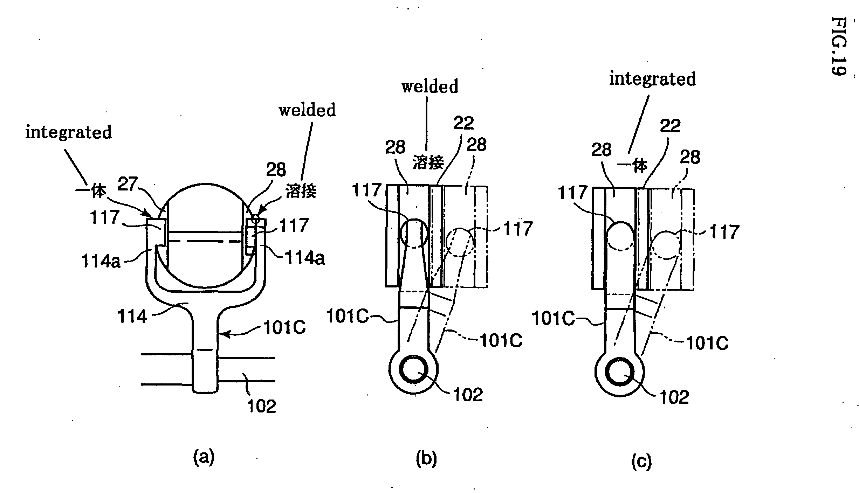

FIGS. 17 to 20 show various shapes of arm members 101A to 101D. (a) of each figure indicates a section perpendicular to the axis of each ball nut 22. (b) of each figure, which is a view from the right side of (a), shows two respective outlines when the respective arm members 101A to 101D are positioned perpendicular to the ball nut 22, and when they are inclined at about 20° toward the right side. FIG. 19(c) illustrates the same state as (b).

Each arm member 101A to 101D has a two-branch section 114. Fundamentally, among the structural members of these arm members 101A to 101D, only the portions that fit into the grooves 27, 28 (hereinafter referred to as "cam followers") are different in shape.

In FIG. 17, a cam follower 115 is formed with a circular shape and distal ends 114a of the two-branch section 114 are tapered so as to connect to the bottom section (given the perspective of the figure) of this cam follower 115.

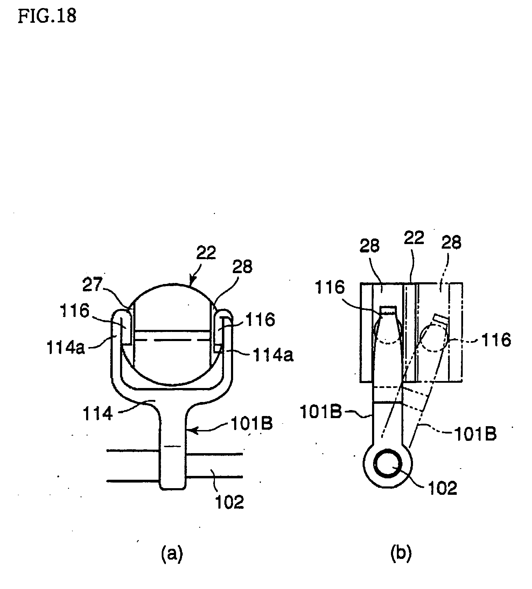

In FIG. 18, a cam follower 116 has a circular shape and is formed by bending the distal ends 114a of the two-branch section 114 inwards to the ball nut 22 side, and inserting them into the grooves 27 and 28..

In FIG. 19, the cam follower 17 is formed with a circular shape. The distal ends 114a of the two-branch section 114 overlap with the entire length of the cam follower 117 in the vertical direction of the figure. The cam follower 117 may be configured such that the distal end 114a of the two-branch section 114 are welded as shown in FIG. 19(b), or may be formed integrally with the distal ends 114a of the two-branch section 114.

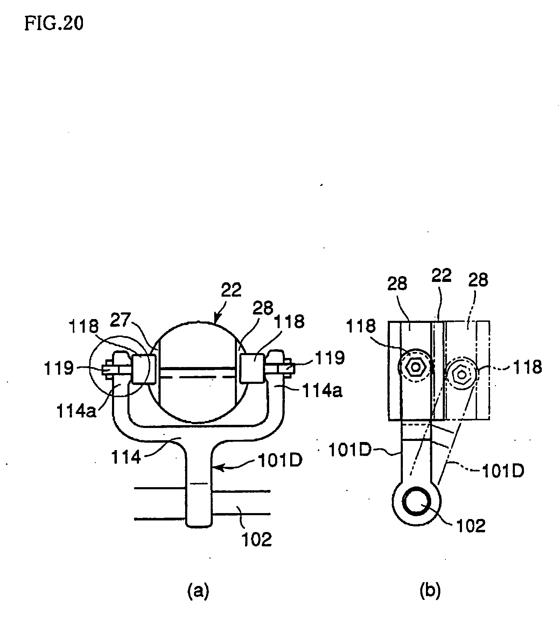

The cam follower 118 in FIG. 20 is formed by a roller-like member. This cam follower 118 is rotatably supported by a shaft 119 that is supported by the distal ends 114a of the two-branch section 114. The cam follower 118 shown in FIG. 20 enables the arm member 101D to swing with a smooth motion along with movement of the ball nut 22.

If the configuration of each arm member 101A to 101D is symmetrical with respect to the vertical center line in the figures, as shown in (a) of each of FIGS. 17 to 20, the arm members 101A to 101D can be constructed by joining together two components of the same shape that are separated into left-right sections with respect to this center line. In this case, production costs can be reduced through mass production of components having the same shape.

However, with the arm members 101A to 101D shown in FIGS. 17 to 20, the arm member 6 shown in FIGS. 2, 5 and 6 and the arm member 63 shown in FIG. 7, the distance between each of the right and left distal ends 114a is large, which results in a large space being occupied. In order to prevent the distal ends 114a of the two-branch section 114 from interfering with the side wall 22a of the grooves 27 and 28 in the ball nut 22 when the respective arm members swing as shown in FIG. 17(a), a distance L2 between inside faces of the distal ends 114a is set larger than an outside diameter L1 of the ball nut 22. As a result, space efficiency is reduced.

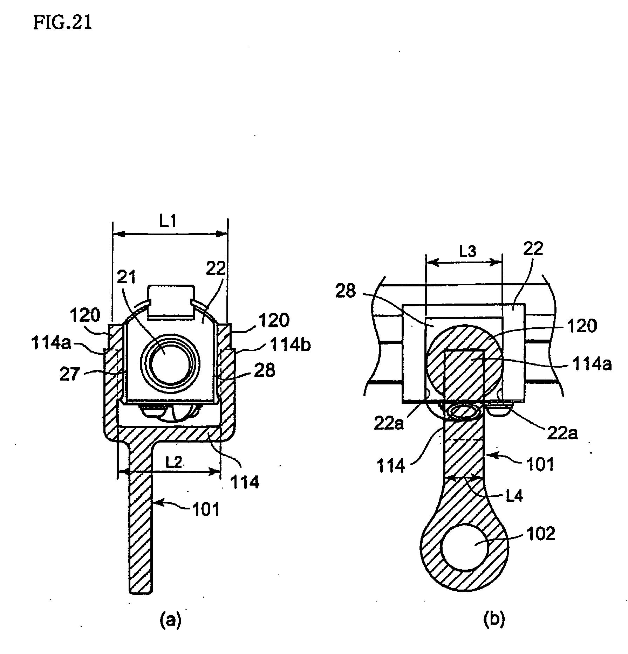

To address this, as an other example of this embodiment, the arm member 101 may be constructed with the configuration shown in FIG. 21. FIG. 21(a) shows a section in a direction perpendicular to the axis of the ball nut 22. FIG. 21(b) is a view of (a) as seen from the right side.

In other words, as shown in FIG. 21(b), a width L3 of the groove 28 (27) in the ball nut 22 is enlarged, and correspondingly the outside diameter of the circular cam follower 120 is enlarged. Further, a width L4 of the distal end 114a of the two-branch section 114 is shortened. Consequently, for example, even if the arm member 101 is inclined to the left side or right side from the state shown in FIG. 2 1 (b), interference between the side wall 22a of the groove 28 (27) and the distal end 114a of the two-branch section 114 can be effectively prevented. As a result, the distance L2 between the distal ends 114a can be made smaller than the outside diameter L1 (see FIG. 17(a)) of the ball nut 22, as shown in FIG. 21(a). That is, it is possible to reduce the space occupied since it is possible to make the configuration of the two-branch section smaller.

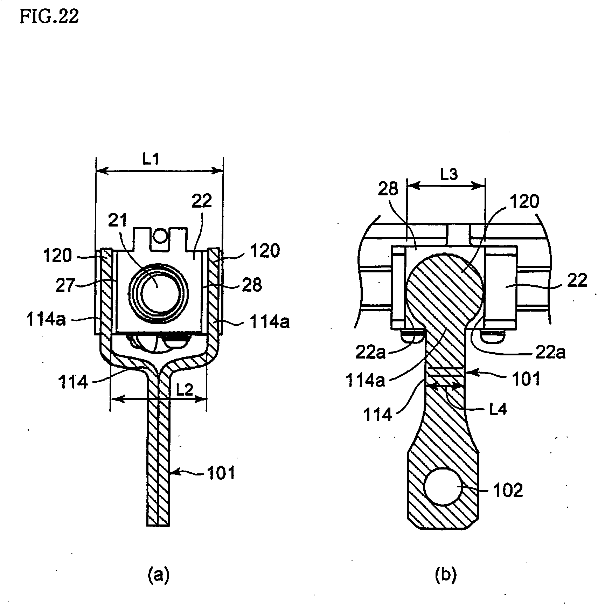

FIGS. 22(a), (b) show still an other example of the arm member. As shown in FIGS. 22(a), (b), the width L3 of the groove 28 (27) in the ball nut 22 is formed to be large, and correspondingly the outside diameter of the circular cam follower 120 is enlarged. Further, the width L4 between the distal ends 114a of the two-branch section 114 is reduced. As a result, even if the arm member 101 is inclined to the right side or left side from the state shown in FIG. 22 (b), interference between the side wall 22a of the groove 28 (27) and the distal end 114a of the two-branch section 114 can be effectively blocked. Consequently, as shown in FIG. 22(a), the width (distance) L2 between the distal ends 114a can be made smaller than a width L5 of the ball nut 22. That is, it is possible to make the configuration of the two-branch section 114 small, whereby it is possible to reduce the occupied space. Because the configuration of the arm member 101 shown in FIGS. 22(a), (b) is symmetrical with respect to the center line in the vertical direction in (a), like those shown in FIGS. 17 to 20 above, the arm member 101 can be constructed by joining together two components of the same shape that are separated into left-right sections with respect to this center line. Consequently, production costs can be reduced through mass production of components having the same shape.

### (4) Range control shaft

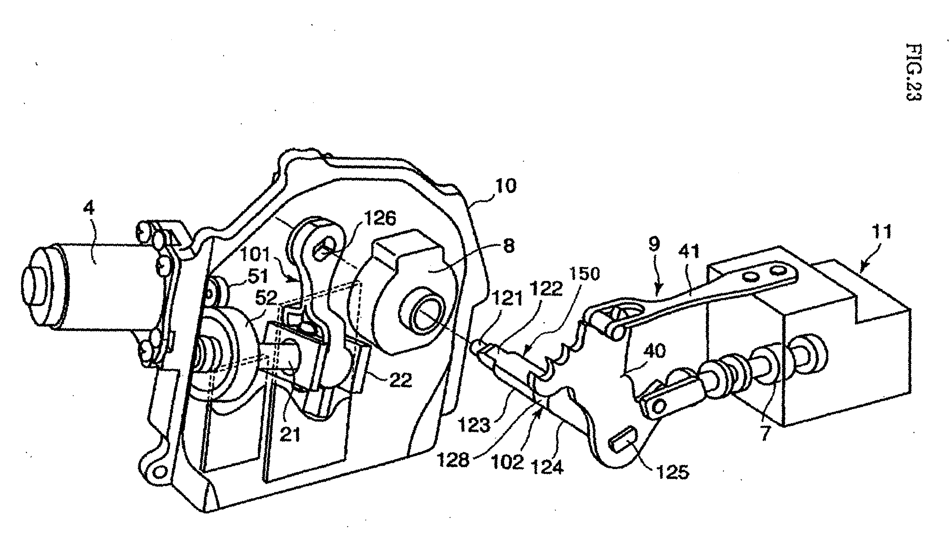

FIGS. 11 and 23 are semi-exploded perspective views of the range switching device 100, showing the range control shaft 102 of this embodiment.

As shown in these figures, the range control shaft 102 includes a distal end supporting section 121, an arm fitting section (rectangular prism section) 122, a sensor fitting section 123, a rear end supporting section 124 and a lever fitting section 125, in that order from the distal end side (the upper section in FIG. 11) to the proximal end side. The distal end supporting section 121 is formed to be cylindrically, and fits into a cylindrical concave section 14a in the upper cover 14 of the case member 10. That is, the distal end supporting section 121 has a spigot-joint like configuration and is supported rotatably by the concave section 14a. Because this spigot-joint like configuration is adopted, it is no longer necessary for the distal end of the range control shaft 102 to be tightened with a nut. As a result, when the SBW unit is assembled to the A/T case 12, attachment to the A/T case 12 can be executed after the SBW unit itself is assembled, thereby reducing the total number of assembly steps.

The arm fitting section 122 is formed as a square pipe, and fits into the rectangular through hole (fitting section) 126 made in the arm member 101. The sensor fitting section 123 has a step and passes through the center of the position sensor 8 and is fitted in the through hole provided in the position sensor 8. The rear end supporting section 124 is formed so as to be cylindrically, and is rotatably supported by a needle bearing (bearing member) 127 attached to a part (the case 12) of the automatic transmission. The lever fitting section 125 is formed as a square pipe, and fits into the rectangular through hole 43 in the detent lever 40. Because the range control shaft 102 is supported at by both ends in the length direction, namely, the distal end supporting section 121 and the rear end supporting section 124 are supported rotatably by the concave section 14a and the needle bearing 127, the influence of angle error on the position sensor 8 can be reduced.

If only the distal end supporting section 121 of the range control shaft 102 has such a spigot-joint like configuration, when the SBW unit is installed onto the A/T case 12, non-required inclination of the range control shaft 102 is liable to occur.

Thus, according to this embodiment, by adopting the spigot-joint like configuration for the fitting configuration, namely a fitting configuration 128, in which the case member 10 of the SBW unit is fit to the A/T case 12, this non-required inclination can be inhibited. As a result, by fitting the SBW unit after assembly into the A/T case 12, the A/T case 12 and the SBW unit is accurately connected and at the same time, the distal end supporting section 121 of the range control shaft 102 is fitted into the concave section 14a. Consequently, the range control shaft 102 is rotatably supported by the distal end supporting section 121 and the rear end supporting section 124, thereby inhibiting occurrence of non-required inclination of the range control shaft 102.

By adopting this configuration in which the case member 10 is installed externally on the casing (equivalent to the A/T case 12 of the embodiment) of the power train, the range switching device can be installed onto the casing as a single unit together with the case member 10. Therefore, this range switching device can be easily installed on a vehicle that is not provided with the range switching device of the present invention. The term "power train" mentioned here refers to: an engine as a drive unit; an automatic transmission (A/T) that automatically executes a take-off operation and speed change operation; a semi-automatic transmission in which speed change is carried out manually; a continuous variable transmission (CVT) capable of controlling a speed change ratio of a shifted gear; an internal combustion engine and an electric motor for driving a hybrid vehicle; or a motor for driving an electric motor.

### (5) First control unit (SBW, CU) and second control unit (A/T, ECU)

According to this embodiment, as shown in FIGS. 10(a), (b), the first control unit 104 for controlling the motor 4 and the second control unit 105 for controlling the automatic transmission are separate. That is, the first control unit 104 for controlling the motor 4 is provided on a separate substrate from the second control unit 105. Further, the first control unit 104 and the second control unit 105 are housed in independent concave housing chambers 130 and 131, which have different sizes. These housing chambers 130 and 131 are divided by a wall section 132. Thus, the second control unit 105 can use the same case, even when the final product does not employ the first control unit 104. Further, because the first control unit 104 and the second control unit 105 are housed in the accommodating chambers 130 and 131 having different sizes, they can be easily positioned at the time of installation and their positioning accuracies can be improved. Moreover, in the case of bonding the first and second control units 104 and 105 with adhesive agent, even if excessive adhesive agent is applied, there is no possibility that that the adhesive agent will flow out into the other accommodating chamber, thereby impairing the control unit therein. Further, if the accommodating chambers 104 and 105 are configured such that they communicate with each other by providing a gap in the top section of the wall section, the number of breathers can be reduced to one, as compared to a case when two breathers are needed due to the first and second control units 104 and 105 being accommodated in separate accommodating chambers.

### Seventh embodiment

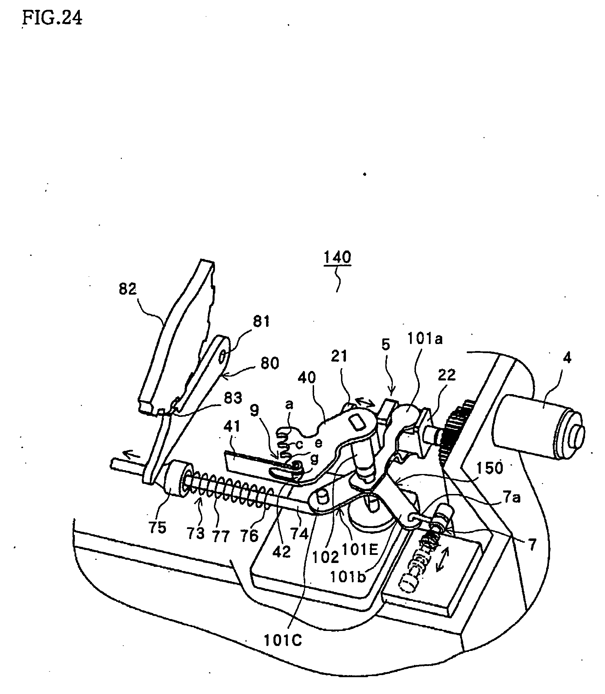

FIG. 24 is a perspective view that schematically shows the configuration of a range switching device 140 of this embodiment.

According to this embodiment, an intermediate member 150 is disposed between the conversion mechanism 5 and the range switching member 7. The intermediate member 150 includes the range control shaft 102 which is freely rotatable, the detent lever 40 installed on the top of the range control shaft 102, and an arm member 101E installed on the bottom of the range control shaft 102. The range control shaft 102, the detent lever 40 and the arm member 101E rotate (swing) in an integrated manner around the range control shaft 102. The detent lever 40 has a plurality of range grooves a, c, e and g. When the detent lever 40 rotates such that the roller 42, which is held at the distal end of the detent spring 41, engages with any one of these range grooves a, c, e and g due to urging force thereupon, the range switching member 7 is positioned at a predetermined corresponding position via the intermediate member 150.

The arm member 101E shown in the figure has three arms 101a, 101b and 101c. These three arms 101a, 101b and 101c are disposed at positions that are substantially 120 degrees apart in the circumferential direction. Of these arms, the arm 101a is engaged with the ball nut 22 that constitutes, along with the ball screw shaft 21, a ball screw (which act as the conversion mechanism 5). The arm 101b is connected to the range switching member 7 through the connecting member 7a. The arm 101c is connected to the parking rod 74 of the parking mechanism 73. Referring to the figure, the range switching member 7 is disposed at the P range (parking) and then, the parking rod 74 is moved in the direction of the arrow. Accordingly, the compression spring 77 is urged in the direction of the arrow by the flange section 76 that is integrated with the parking rod 74, and the wedge 75 is urged in the direction of the arrow by this compression spring 77, so that the parking pole 80 is urged upward. As a result, if the parking gear 82 is rotated slightly, the pawl 83 of the parking pawl 80 engages the parking gear 82 so that locking takes place.

According to this embodiment, the ball screw shaft 21 for moving the ball nut 22, the range switching member 7 and the parking rod 74 are disposed such that their axes are located on substantially the same plane. Consequently, when the arm member 101E swings, only a rotation force around the range control shaft 102 is applied, and no other unnecessary rotation force is generated. Further, the ball screw shaft 21 and the parking rod 74 are disposed substantially in parallel to each other and the movement direction of the ball nut 22 is opposite to the movement direction of the parking rod 74. Additionally, the range switching member 7 is disposed perpendicular to the ball screw shaft 21 and the parking rod 74, so that it moves in the perpendicular direction.

Because the three members, that is, the ball screw shaft 21, the range switching member 7 and the parking rod 74 are disposed with the above described positional relationship and movement directions with respect to the arm member 101E, the range switching member 7 and the parking rod 74 can operate smoothly with a linear motion along the length direction, as a result of the swinging motion of the arm member 101E originating from the linear motion of the ball nut 22. Further, the movement direction of the range switching member 7 is different from the movement direction of the parking rod 74, so that when the range switching member 7 is moved, it is unlikely to be affected by the movement of the parking rod 74. Therefore, movement accuracy and positioning accuracy of the range switching member 7 can be improved.

In the above description, an example has been described in which the parking rod 74 is disposed in parallel to the ball screw shaft 21 and the range switching member 7 is disposed at right angles thereto. However, the invention is not limited to the above description, and by interposing the arm member 101E in the above described manner, the movement directions of the parking rod 74 and the range switching member 7 may be set as chosen. In other words, it is possible to set the positional relationship and the movement direction of these members as chosen, thus allowing design freedom to be substantially improved. It should be noted that, if necessary for reasons related to space constraints, the ball screw shaft 21, the range switching member 7 and the parking rod 74 do not need to be disposed on the same plane.

## Claims

1. A vehicle running range switching device that executes switching among a plurality of running ranges of a vehicle from one of the running ranges to a predetermined running range selected by a vehicle driver, by switching a range switching member based on an electric signal, comprising:
a range selection unit that is used by the vehicle driver to select the running range;
a motor which is controlled according to a signal from the range selection unit;
a conversion mechanism for converting rotary motion of the motor to linear motion; and
an intermediate member for converting linear motion obtained by the conversion mechanism to swinging motion, wherein
the range switching member, which is disposed so as to be capable of movement across a plurality of selection regions corresponding to the plurality of running ranges, is switched to a specific selection region based on swinging motion of the intermediate member.

2. The vehicle running range switching device according to claim 1, wherein the intermediate member is disposed between the range switching member and the conversion mechanism, and the range switching member is switched to a specified selection region among the plurality of selection regions through the intermediate member based on rotary motion of the motor.

3. The vehicle running range switching device according to claim 1 or 2, wherein the intermediate member has an arm member for converting linear motion obtained by the conversion mechanism to swinging motion.

4. The vehicle running range switching device according to claim 1, 2 or 3, further comprising:
a detent mechanism for holding the range switching member in a specified selection region among the plurality of selection regions through the intermediate member.

5. The vehicle running range switching device according to claim 4, wherein the detent mechanism has a detent member that is integrated with the arm member, and the arm member converts linear motion of the conversion mechanism to swinging motion and transmits to the detent member.

6. The vehicle running range switching device according to claim 4 or 5, wherein the range switching member is connected to the detent member.

7. The vehicle running range switching device according to claim 4, 5 or 6, wherein
the conversion mechanism is configured so as to be capable of reciprocally converting between rotary motion and linear motion,
the range switching member is moved to a specified selection region of the plurality of selection regions by rotation of the motor controlled in accordance with an electric signal from the range selection unit, and
the detent mechanism positions and holds the range switching member moved to the specified selection region at a specified position.

8. The vehicle running range switching device according to claim 7, wherein the range switching member is a manual valve and the intermediate member converts rotary motion of the motor to linear motion that slides the manual valve so as to position the manual valve in a specified selection region of the plurality of selection regions.

9. The device according to any one of claims 1 to 8, further comprising:
a case member on which the motor is mounted,
a position detecting unit for detecting the position of the range switching member, wherein
the case member accommodates at least one of a first control unit for controlling the motor based on an output from the position detecting unit and a second control unit for controlling a transmission.

10. The vehicle running range switching device according to claim 9, wherein the position detecting unit detects the position of the range switching member through the intermediate member.

11. The device according to any one of claims 1 to 10, wherein the conversion mechanism is a ball screw including a ball screw shaft rotated by the motor; a ball nut which engages with the ball screw shaft so as to be capable of axial direction movement with respect thereto and which is moved by rotary motion of the ball screw shaft; and balls interposed between the ball screw shaft and the ball nut.

12. The device according to any one of claims 1 to 11, wherein the conversion mechanism includes an axial cam member having a spiral cam groove which is rotated by the motor, and a roller-shaped cam follower which is rotatably supported by the arm member and which is moved along the cam groove by rotation of the cam member.

13. The device according to any one of claims 3 to 12, wherein the range switching member is joined to the arm member.

14. A vehicle running range switching device that executes switching among a plurality of running ranges of a vehicle from one of the running ranges to a predetermined running range selected by a vehicle driver, by switching a range switching member based on an electric signal, comprising:
a range selection unit that is used by the vehicle driver to select the running range;
a motor which is controlled according to a signal from the range selection unit; and
a conversion mechanism for converting rotary motion of the motor to linear motion so as to switch the range switching member,
the conversion mechanism including a screw member which rotates based on rotation of the motor, a nut member which is fastened to the screw member, and a rotation stopping unit which prohibits rotary motion of the nut member and which allows linear movement along the screw member, and the nut member being moved linearly by rotation of the screw member so as to switch the range switching member.

15. The vehicle range switching device according to claim 14, wherein the rotation stopping unit is supported by a case member.

16. The device according to claim 14 or 15, wherein the case member accommodates at least the conversion mechanism.

17. The device according to claim 14, 15 or 16, wherein the rotation stopping unit includes a guide groove formed in the nut member in the axial direction of the screw member; and an engagement member which loosely fits into the guide groove and which is held by the case member.

18. The device according to claims 14, 15, 16 or 17, wherein the conversion mechanism includes a ball screw shaft that acts as the screw member, a ball nut that acts as the nut member and an arm member which is engaged with the ball nut and which swings with linear motion of the ball nut so as to switch the range switching member, the arm member having a two-branch section which is engaged with the ball nut so as to sandwich both sides of the ball nut in the diameter direction thereof.

19. A vehicle running range switching device that executes switching among a plurality of running ranges of a vehicle from one of the running ranges to a predetermined running range selected by a vehicle driver, by switching a range switching member based on an electric signal, comprising:
a range selection unit that is used by the driver to select the running range;
a motor which is controlled according to a signal from the range selection unit;
a conversion mechanism for converting rotary motion of the motor to linear motion so as to switch the range switching member; and
an auxiliary switching unit for switching the range switching member based on manual operation, regardless of the electric signal.

20. The vehicle range switching device according to claim 19, wherein the auxiliary switching unit is connected to a power transmitting member for transmitting power from the conversion mechanism to the range switching member, such that the auxiliary switching unit is capable of being disconnected from the power transmitting member in order to enable selectively switching of the range switching member.

21. The device according to claim 19 or 20, wherein the auxiliary switching unit switches the range switching member by driving the conversion mechanism through the manual operation.

22. The device according to claim 19 or 20, wherein the auxiliary switching unit switches the range switching device by driving an intermediate member disposed between the conversion mechanism and the range switching member using manual operation.

23. The device according to claim 19, 20, 21 or 22, wherein the conversion mechanism includes a shaft which rotates due to rotation of the motor, and a member which is disposed outside of the shaft and which moves linearly along the shaft, the auxiliary switching unit being connected to same member so as to be capable of engagement and disengagement therewith, thus enabling selective switching of the range switching member.

24. The vehicle range switching device according to claim 23, wherein the auxiliary switching unit has an axial member which is disposed in parallel to the axis of the shaft and which is slid in the axial direction by manual operation.

25. The device according to any one of claims 19 to 24, wherein the conversion mechanism includes a ball screw shaft that is rotated by the motor; a ball nut which engages with the ball screw shaft so as to be movable in the axial direction and which is moved by rotary motion of the ball screw shaft; and balls interposed between the ball screw shaft and the ball nut.

26. The device according to claim 25, wherein the auxiliary switching unit is connected to the ball nut so as to be capable of engagement and disengagement therewith, thereby enabling selective switching of the range switching member.

27. The device according to claim 25 or 26, wherein the ball nut has a protrusion that protrudes toward the axial member side, and the axial member has a hook which engages the protrusion when the axial member is slid in the axial direction so as to move the ball nut.
